(19) Europäisches Patentamt / European Patent Office / Office européen des brevets

(11) **EP 4 167 629 A1**

(12) **EUROPEAN PATENT APPLICATION**
published in accordance with Art. 153(4) EPC

(43) Date of publication:
**19.04.2023  Bulletin 2023/16**

(21) Application number: **21829627.5**

(22) Date of filing: **21.06.2021**

(51) International Patent Classification (IPC):
*H04W 24/10* (2009.01)

(52) Cooperative Patent Classification (CPC):
**H04B 7/0456; H04B 7/06; H04W 24/10**

(86) International application number:
**PCT/CN2021/101158**

(87) International publication number:
**WO 2021/259180 (30.12.2021 Gazette 2021/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.06.2020  CN 202010591803**

(71) Applicant: **Huawei Technologies Co., Ltd.**
**Longgang District,**
**Shenzhen, Guangdong 518129 (CN)**

(72) Inventors:
• **WANG, Mingzhe**
  **Shenzhen, Guangdong 518129 (CN)**
• **REN, Xiang**
  **Shenzhen, Guangdong 518129 (CN)**
• **JIN, Huangping**
  **Shenzhen, Guangdong 518129 (CN)**
• **BI, Xiaoyan**
  **Shenzhen, Guangdong 518129 (CN)**

(74) Representative: **MERH-IP Matias Erny Reichl Hoffmann**
**Patentanwälte PartG mbB**
**Paul-Heyse-Strasse 29**
**80336 München (DE)**

(54) **MEASUREMENT REPORTING METHOD AND APPARATUS**

(57)    Embodiments of this application provide a measurement reporting method and apparatus, to resolve a problem in the conventional technology that poor data transmission performance is caused by an inaccurate channel state information feedback. The method includes: performing channel measurement based on a downlink reference signal from a network device; and reporting a measurement result to the network device, where the measurement result indicates T resource elements and a superposition coefficient, the resource element is determined based on at least one of the following base vectors: a time domain base vector and a receive side spatial domain base vector, and T is an integer greater than 0. In embodiments of this application, a channel feature of a channel in an angle domain can be more accurately reflected by using the receive side spatial domain base vector, and a time variant feature of the channel can be reflected by using the time domain base vector. When reporting channel measurement information, a terminal device reports the time domain base vector and the receive side spatial domain base vector, to improve accuracy of a channel state information feedback, thereby improving data transmission performance.

FIG. 9

**Description**

**CROSS-REFERENCE TO RELATED APPLICATIONS**

This application claims priority to Chinese Patent Application No. 202010591803.4, filed with the China National Intellectual Property Administration on June 24, 2020 and entitled "MEASUREMENT REPORTING METHOD AND APPARATUS", which is incorporated herein by reference in its entirety.

**TECHNICAL FIELD**

This application relates to the field of communications technologies, and in particular, to a measurement reporting method and apparatus.

**BACKGROUND**

A 5G communications system has higher requirements on aspects such as system capacity and spectral efficiency. In the 5G communications system, a large-scale multiple input multiple output (multiple input multiple output, MIMO) technology plays a critical role on spectral efficiency of the system. When the MIMO technology is used, a base station needs to perform modulation and coding and signal precoding when sending data to user equipment (user equipment, UE). How the base station sends data to the UE needs to depend on channel state information (channel state information, CSI) fed back by the UE to the base station. Therefore, accuracy of the CSI plays a very important role on system performance.

In an actual system, a key factor that affects system performance is that a CSI feedback usually has a delay, causing a problem of expiration of CSI obtained by the base station. To be specific, there is a delay between the CSI that is fed back by the UE and that is obtained by the base station and CSI of a current real channel. Consequently, precoder that is calculated by the base station based on the CSI fed back by the UE and that is used to send data is different from precoder calculated based on the real channel, causing a performance loss in data transmission.

**SUMMARY**

Embodiments of this application provide a measurement reporting method and apparatus, a chip, a computer-readable storage medium, a computer program product, and the like, to resolve a problem in the conventional technology that poor data transmission performance is caused by an inaccurate CSI feedback.

According to a first aspect, an embodiment of this application provides a measurement reporting method. The method may be applied to a terminal device, or a chip or a chipset in the terminal device. The method includes: performing channel measurement based on a downlink reference signal from a network device, and reporting a measurement result to the network device, where the measurement result indicates T resource elements and a superposition coefficient, the resource element is determined based on at least one of the following base vectors: a time domain base vector and a receive side spatial domain base vector, and T is an integer greater than 0. In this embodiment of this application, a channel feature of a channel in an angle domain can be more accurately reflected by using the receive side spatial domain base vector, and a time variant feature of the channel can be reflected by using the time domain base vector. When reporting channel measurement information, the terminal device reports the time domain base vector and the receive side spatial domain base vector, to improve accuracy of a CSI feedback, thereby improving data transmission performance.

According to a second aspect, an embodiment of this application provides a measurement reporting method. The method may be applied to a network device, or a chip or a chipset in the network device. The method includes: sending a downlink reference signal to a terminal device; and receiving a measurement result from the terminal device, where the measurement result indicates T resource elements and a superposition coefficient, the resource element is determined based on at least one of the following base vectors: a time domain base vector and a receive side spatial domain base vector, and T is an integer greater than 0. In this embodiment of this application, a channel feature of a channel in an angle domain can be more accurately reflected by using the receive side spatial domain base vector, and a time variant feature of the channel can be reflected by using the time domain base vector. When reporting channel measurement information, the terminal device reports the time domain base vector and the receive side spatial domain base vector, to improve accuracy of a CSI feedback, thereby improving data transmission performance.

For the first aspect and the second aspect,
in a possible design, the resource element may be determined based on a frequency domain base vector, the time domain base vector, the receive side spatial domain base vector, and a transmit side spatial domain base vector, and the superposition coefficient is a superposition coefficient corresponding to the T resource elements. In the foregoing manner, the channel feature of the channel in the angle domain can be more accurately reflected by using the receive side spatial domain base vector and the transmit side spatial domain base vector, and the time variant feature of the channel can be reflected by using the time domain base vector. In the foregoing solution, compression feedback is performed on the channel in four dimensions: the frequency domain base vector, the time domain base vector, the receive side spatial domain base vector, and the transmit side spatial domain base vector, so that more accurate channel prediction can be performed.

In a possible design, a codebook structure may satisfy the following formula:

$$H^{NTx \times NRx \times N_f \times N_t} = \sum_{l=0}^{L-1} \sum_{m=0}^{M-1} \sum_{f=0}^{K-1} \sum_{t=0}^{N-1} a_{stx,srx,f,t} S_{tx(l)}^{NTx \times 1 \times 1 \times 1} \otimes S_{rx(m)}^{1 \times NRx \times 1 \times 1} \otimes F_f^{1 \times 1 \times N_f \times 1} \otimes$$

$$T_t^{1 \times 1 \times 1 \times N_t},$$

where $H^{NTx \times NRx \times N_f \times N_t}$ is the channel, $L$ is a quantity of beams in transmit side spatial domain, $M$ is a quantity of beams in receive side spatial domain, $K$ is a quantity of beams in frequency domain, $N$ is a quantity of beams in time domain, $a_{stx,srx,f,t}$ is the superposition coefficient corresponding to the T resource elements, $S_{tx(l)}^{NTx \times 1 \times 1 \times 1}$ is the $l^{th}$ transmit side spatial domain base vector with a dimension of $N_{Tx} \times 1 \times 1 \times 1$, $S_{rx(m)}^{1 \times NRx \times 1 \times 1}$ is the $m^{th}$ receive side spatial domain base vector with a dimension of $1 \times N_{Rx} \times 1 \times 1$, $F_f^{1 \times 1 \times N_f \times 1}$ is the $f^{th}$ frequency domain base vector with a dimension of $1 \times 1 \times N_f \times 1$, $T_t^{1 \times 1 \times 1 \times N_t}$ is the $t^{th}$ time domain base vector with a dimension of $1 \times 1 \times 1 \times N_t$, $N_{Tx}$ is a length of the transmit side spatial domain base vector, $N_{Rx}$ is a length of the receive side spatial domain base vector, $N_f$ is a length of the frequency domain base vector, $N_t$ is a length of the time domain base vector, and $\otimes$ is a Kronecker product.

In a possible design, the codebook structure may further satisfy the following formula:

$$H^{Nall \times 1} = \sum_{m=0}^{R-1} \alpha_m V^{Nall \times 1},$$

where $H^{Nall \times 1}$ is the channel, $V^{Nall \times 1} = S_{rx}^{NRx \times 1} \otimes S_{tx}^{NTx \times 1} \otimes F^{N_f \times 1} \otimes T^{N_t \times 1}$, $N_{all} = N_{rx} \times N_{tx} \times N_f \times N_t$, quantities of beams in transmit side spatial domain, receive side spatial domain, frequency domain, and time domain are all R, $\alpha_m$ is the superposition coefficient corresponding to the T resource elements, $S_{tx}^{NTx \times 1}$ is the transmit side spatial domain base vector with a dimension of $N_{Tx} \times 1$, $S_{rx}^{NRx \times 1}$ is the receive side spatial domain base vector with a dimension of $N_{Rx} \times 1$, $F^{Nf \times 1}$ is the frequency domain base vector with a dimension of $N_f \times 1$, $T^{Nt \times 1}$ is the time domain base vector with a dimension of $N_t \times 1$, $N_{Tx}$ is a length of the transmit side spatial domain base vector, $N_{Rx}$ is a length of the receive side spatial domain base vector, $N_f$ is a length of the frequency domain base vector, $N_t$ is a length of the time domain base vector, and $\otimes$ is a Kronecker product.

In a possible design, $N_{Tx}$ is a quantity of transmit antennas of the network device, $N_{Rx}$ is a quantity of receive antennas of the terminal device, $N_f$ is a quantity of frequency domain resources, and $N_t$ is a quantity of time domain resources.

In a possible design, the resource element may be determined based on a frequency domain base vector, the receive side spatial domain base vector, and a transmit side spatial domain base vector, and the superposition coefficient is a superposition coefficient corresponding to the T resource elements. In the foregoing manner, the channel feature of the channel in the angle domain can be more accurately reflected by using the receive side spatial domain base vector and the transmit side spatial domain base vector. In the foregoing solution, compression feedback is performed on the channel in three dimensions: the frequency domain base vector, the receive side spatial domain base vector, and the transmit side spatial domain base vector, so that more accurate channel prediction can be performed.

In a possible design, the resource element is determined based on a frequency domain base vector, the receive side spatial domain base vector, and a transmit side spatial domain base vector, the measurement result further indicates the time domain base vector, the superposition coefficient is a superposition coefficient corresponding to the time domain base vector, and the superposition coefficient corresponding to the time domain base vector is determined based on a superposition coefficient corresponding to the T resource elements. In the foregoing manner, the channel feature of the channel in the angle domain can be more accurately reflected by using the receive side spatial domain base vector and the transmit side spatial domain base vector, and a channel time variation is estimated based on a high-precision Doppler frequency, to improve prediction precision of the channel in time domain.

In a possible design, the resource element and the superposition coefficient corresponding to the resource element satisfy the following formula:

$$H_n = \sum_{k=1}^{K} \sum_{m=1}^{M} \sum_{l=1}^{L} c_n^{k,l,m} S_k^{tx} \otimes S_m^{rx} \otimes F_l,$$

where $H_n$ is the channel, $L$ is the quantity of beams in transmit side spatial domain, $M$ is the quantity of beams in receive side spatial domain, $K$ is the quantity of beams in frequency domain, $c_n^{k,l,m}$ is the superposition coefficient corresponding to the resource element, $S_k^{tx}$ is the $k^{th}$ transmit side spatial domain base vector set, which may include transmit side spatial domain base vectors corresponding to the channel at Q moments, where Q is a quantity of times of sending the downlink reference signal, $S_m^{rx}$ is the $m^{th}$ receive side spatial domain base vector set, which may include receive side spatial domain base vectors corresponding to the channel at the Q moments, and $F_l$ is the $l^{th}$ frequency domain base vector set, which may include frequency domain base vectors corresponding to the channel at the Q moments.

The time domain base vector and the superposition coefficient corresponding to the time domain base vector may satisfy the following formula:

$$d^{stx,srx,f} = C^{stx,srx,f}D^* = [d_1^{stx,srx,f}, d_2^{stx,srx,f}, ..., d_Q^{stx,srx,f}],$$

where $d^{stx,srx,f}$ is the superposition coefficient corresponding to the time domain base vector, $C^{stx,srx,f}$ is the superposition coefficient corresponding to the resource element, $D^*$ is the time domain base vector, and Q is the quantity of times of sending the downlink sending signal.

In a possible design, the resource element is the time domain base vector, and the superposition coefficient is a superposition coefficient corresponding to the time domain base vector. In the foregoing manner, based on an existing codebook structure, the channel time variation may be further estimated based on the high-precision Doppler frequency, so that the channel can be predicted in time domain.

In a possible design, the receive side spatial domain base vector is an oversampling discrete fourier transform (discrete fourier transform, DFT) vector.

In a possible design, the receive side spatial domain base vector is a non-orthogonal vector.

In a possible design, an oversampling rate of the receive side spatial domain base vector is related to the quantity of times of sending the downlink reference signal.

In a possible design, the oversampling rate of the receive side spatial domain base vector is equal to the quantity of times of sending the downlink reference signal.

In a possible design, the time domain base vector is an oversampling DFT vector

In a possible design, the time domain base vector is a non-orthogonal vector or an orthogonal vector.

For the first aspect,
in a possible design, the performing channel measurement based on a downlink reference signal from a network device includes: receiving downlink reference signals of Q time units, where a sending periodicity of the downlink reference signal is related to movement information of the terminal device, and Q is an integer greater than 0; separately measuring the downlink reference signals of the Q time units to obtain measurement values of the downlink reference signals of the Q time units; and performing weighted combination on the measurement values of the downlink reference signals of the Q time units.

In the foregoing manner, in a movement process, the terminal device receives the downlink reference signals that are sent by the network device and that match a movement speed of the terminal device, and performs weighted combination on the downlink reference signals received at Q locations on a movement route. This is equivalent to weighting of array antennas with a specific spacing, and is equivalent to increasing a quantity of receive apertures. Therefore, a multipath resolution capability of a receive end of the terminal device can be enhanced, an angle of arrival can be further enabled to be more accurately estimated, and resolution precision of a path is improved, to improve Doppler (Doppler) frequency estimation precision.

In a possible design, before receiving downlink reference signals of a plurality of time units, the method further includes: sending the movement information to the network device. By using the foregoing design, the network device can control the sending periodicity of the downlink reference signal based on the movement information of the terminal device.

In a possible design, the method further includes: receiving measurement configuration information from the network device, where the measurement configuration information configures Q resource sets, one resource set corresponds to one time unit, and Q is an integer greater than 0; or the measurement configuration information configures Q downlink reference signals, one downlink reference signal corresponds to one time unit, and Q is an integer greater than 0.

In a possible design, before the performing channel measurement based on a downlink reference signal from a network device, the method further includes: receiving indication information from the network device, where the indication information is used to indicate that a feedback mode is a measurement feedback of a plurality of time units, or the indication information is used to indicate that a codebook type is a feedback codebook of a plurality of time units.

For the second aspect,

in a possible design, before the sending a downlink reference signal to a terminal device, the method further includes: receiving movement information of the terminal device; and determining a sending periodicity of the downlink reference signal based on the movement information; and the sending a downlink reference signal to a terminal device includes: sending Q downlink reference signals to the terminal device based on the sending periodicity, where Q is an integer greater than 0.

By using the foregoing design, the network device can control the sending periodicity of the downlink reference signal based on the movement information of the terminal device. In this way, in a movement process, the terminal device receives the downlink reference signals that are sent by the network device and that match a movement speed of the terminal device, and performs weighted combination on the downlink reference signals received at Q locations on a movement route. This is equivalent to weighting of array antennas with a specific spacing, and is equivalent to increasing a quantity of receive apertures. Therefore, a multipath resolution capability of a receive end of the terminal device can be enhanced, an angle of arrival can be further enabled to be more accurately estimated, and resolution precision of a path is improved, to improve Doppler (Doppler) frequency estimation precision.

In a possible design, the method further includes: sending indication information to the terminal device, where the indication information is used to indicate that a feedback mode is a measurement feedback of a plurality of time units, or the indication information is used to indicate that a codebook type is a feedback codebook of a plurality of time units.

In a possible design, the method further includes: sending measurement configuration information to the terminal device, where the measurement configuration information configures Q resource sets, one resource set corresponds to one time unit, and Q is an integer greater than 0; or the measurement configuration information configures Q downlink reference signals, one downlink reference signal corresponds to one time unit, and Q is an integer greater than 0.

For the first aspect or the second aspect,

in a possible design, the movement information includes a movement speed.

In a possible design, the measurement result includes one piece of indication information, and the indication information is used to indicate a base vector corresponding to the resource element. In the foregoing design, signaling overheads can be reduced in a manner of joint reporting.

In a possible design, the measurement result includes P pieces of indication information, where P is equal to a quantity of base vectors corresponding to the resource element, and one piece of indication information is used to indicate one base vector corresponding to the resource element. In a manner of independent reporting in the foregoing design, feedback accuracy can be improved, and feedback flexibility can be improved.

In a possible design, the measurement result includes a plurality of pieces of indication information, and any piece of indication information in the plurality of pieces of indication information is used to indicate one or more base vectors corresponding to the resource element. In the foregoing design, feedback accuracy and flexibility can be improved when signaling overheads are reduced.

According to a third aspect, this application provides a measurement reporting apparatus. The apparatus may be a terminal device, or a chip or a chipset in the terminal device. The apparatus may include a processing module and a transceiver module. When the apparatus is the terminal device, the processing module may be a processor, and the transceiver module may be a transceiver. The apparatus may further include a storage module, the storage module may be a memory, the storage module is configured to store instructions, and the processing module executes the instructions stored in the storage module, to perform the corresponding function in the first aspect. When the apparatus is the chip or chipset in the terminal device, the processing module may be a processor, a processing circuit, a logic circuit, or the like, and the transceiver module may be an input/output interface, a pin, a circuit, or the like. The processing module executes the instructions stored in the storage module, to perform the corresponding function in the first aspect. The storage module may be a storage module (for example, a register or a cache) in the chip or chipset, or a storage module that is located outside the chip or chipset and that is located in the base station (for example, a read-only memory or a random access memory).

According to a fourth aspect, this application provides a measurement reporting apparatus. The apparatus may be a network device, or a chip or a chipset in the network device. The apparatus may include a processing module and a transceiver module. When the apparatus is the network device, the processing module may be a processor, and the transceiver module may be a transceiver. The apparatus may further include a storage module, the storage module may be a memory, the storage module is configured to store instructions, and the processing module executes the instructions stored in the storage module, to perform the corresponding function in the second aspect. When the apparatus is the chip or chipset in the network device, the processing module may be a processor, a processing circuit, a logic circuit, or the like, and the transceiver module may be an input/output interface, a pin, a circuit, or the like. The processing module executes the instructions stored in the storage module, to perform the corresponding function in the second aspect. The storage module may be a storage module (for example, a register or a cache) in the chip or chipset, or a storage module that is located outside the chip or chipset and that is located in the base station (for example, a read-only memory or a random access memory).

According to a fifth aspect, a measurement reporting apparatus is provided, including a processor. Optionally, a communications interface may be further included. Optionally, a memory may be further included. The communications interface is configured to transmit information, and/or a message, and/or data between the apparatus and another apparatus. The memory is configured to store computer-executable instructions. When the apparatus runs, the processor executes the computer-executable instructions stored in the memory, so that the apparatus performs the method in any one of the first aspect or the designs of the first aspect.

According to a sixth aspect, a measurement reporting apparatus is provided, including a processor. Optionally, a communications interface may be further included. Optionally, a memory may be further included. The communications interface is configured to transmit information, and/or a message, and/or data between the apparatus and another apparatus. The memory is configured to store computer-executable instructions. When the apparatus runs, the processor executes the computer-executable instructions stored in the memory, so that the apparatus performs the method in any one of the second aspect or the designs of the second aspect.

According to a seventh aspect, an embodiment of this application provides a computer storage medium, where the computer storage medium stores program instructions, and when the program instructions are run on a communications device, the communications device is enabled to perform the method in any one of the first aspect and the possible designs of the first aspect in embodiments of this application.

According to an eighth aspect, an embodiment of this application provides a computer storage medium, where the computer storage medium stores program instructions, and when the program instructions are run on a communications device, the communications device is enabled to perform the method in any one of the second aspect and the possible designs of the second aspect in embodiments of this application.

According to a ninth aspect, an embodiment of this application provides a computer program product. When the computer program product runs on a communications device, the communications device is enabled to perform the method in any one of the first aspect and the possible designs of the first aspect in embodiments of this application.

According to a tenth aspect, an embodiment of this application provides a computer program product. When the computer program product runs on a communications device, the communications device is enabled to perform the method in any one of the second aspect and the possible designs of the second aspect in embodiments of this application.

According to an eleventh aspect, an embodiment of this application provides a chip, where the chip is coupled to a memory, to perform the method in any one of the first aspect and the possible designs of the first aspect in embodiments of this application.

According to a twelfth aspect, an embodiment of this application provides a chip, where the chip is coupled to a memory, to perform the method in any one of the second aspect and the possible designs of the second aspect in embodiments of this application.

According to a thirteenth aspect, an embodiment of this application provides a chip, including a communications interface and at least one processor, where the processor runs to perform the method in any one of the first aspect or the designs of the first aspect in embodiments of this application.

According to a fourteenth aspect, an embodiment of this application provides a chip, including a communications interface and at least one processor, where the processor runs to perform the method in any one of the second aspect and the possible designs of the second aspect in embodiments of this application.

It should be noted that, "coupling" in embodiments of this application means that two components are directly or indirectly connected to each other.

**BRIEF DESCRIPTION OF DRAWINGS**

FIG. 1 is a schematic diagram of an antenna array according to an embodiment of this application;
FIG. 2 is a schematic diagram of an architecture of a communications system according to an embodiment of this application;

FIG. 3 is a schematic diagram of a structure of a network device according to an embodiment of this application;

FIG. 4 is a schematic diagram of a structure of a gNB according to an embodiment of this application;

FIG. 5 is a schematic diagram of communication between a network device and UE according to an embodiment of this application;

FIG. 6 is a schematic flowchart of CSI measurement according to an embodiment of this application;

FIG. 7 is a schematic diagram of a CSI feedback delay according to an embodiment of this application;

FIG. 8 is a schematic flowchart of CSI measurement and feedback according to an embodiment of this application;

FIG. 9 is a schematic diagram of a measurement reporting method according to an embodiment of this application;

FIG. 10 is a schematic diagram of construction of a virtual antenna array according to an embodiment of this application;

FIG. 11 is a schematic diagram of a four-dimensional codebook according to an embodiment of this application;

FIG. 12 is a schematic diagram of a structure of a communications apparatus according to an embodiment of this application; and

FIG. 13 is a schematic diagram of a structure of a communications apparatus according to an embodiment of this application.

## DESCRIPTION OF EMBODIMENTS

For ease of understanding embodiments of this application, meanings of main parameters related to embodiments of this application are described below.

(1) F: frequency domain base vector. For example, in a two-dimensional coordinate system, F may be transformed into $F^{Nf\times1}$ or $F^{1\times Nf}$; in a three-dimensional coordinate system, F may be transformed into $F^{1\times Nf\times1}$, or $F^{Nf\times1\times1}$ or $F^{1\times1\times Nf}$; in a four-dimensional coordinate system, F may be transformed into $F^{1\times1\times Nf\times1}$, or $F^{1\times Nf\times1\times1}$, or $F^{Nf\times1\times1\times1}$, or $F^{1\times1\times1\times Nf}$, and so on. $N_f$ is a length of the frequency domain base vector, namely, a quantity of elements included in the frequency domain base vector. In embodiments of this application, a length of a vector may also be referred to as a dimension of the vector. A unified description is provided herein, and details are not described below again.

(2) T: time domain base vector. For example, in a two-dimensional coordinate system, T may be transformed into $T^{Nt\times1}$ or $T^{1\times Nt}$; in a three-dimensional coordinate system, T may be transformed into $T^{1\times Nt\times1}$, or $T^{Nt\times1\times1}$, or $T^{1\times1\times Nt}$; in a four-dimensional coordinate system, T may be transformed into $T^{1\times1\times Nt\times1}$, or $T^{1\times Nt\times1\times1}$, or $T^{Nt\times1\times1\times1}$, or $T^{1\times1\times1\times Nt}$, and so on. $N_t$ is a length of the time domain base vector, namely, a quantity of elements included in the time domain base vector.

(3) S: spatial domain base vector. In a two-dimensional coordinate system, S may be transformed into $S^{Ns\times1}$ or $S^{1\times Ns}$; in a three-dimensional coordinate system, S may be transformed into $S^{1\times Ns\times1}$, or $S^{Ns\times1\times1}$, or $S^{1\times1\times Ns}$; in a four-dimensional coordinate system, S may be transformed into $S^{1\times1\times Ns\times1}$, or $S^{1\times Ns\times1\times1}$, or $S^{Ns\times1\times1\times1}$, or $S^{1\times1\times1\times Ns}$, and so on. $N_s$ is a length of the spatial domain base vector, namely, a quantity of elements included in the spatial domain base vector

(4) $S_{tx}$: transmit side spatial domain base vector. In a two-dimensional coordinate system, $S_{tx}$ may be transformed into $S_{tx}^{N_{Tx}\times1}$ or $S_{tx}^{1\times N_{Tx}}$; in a three-dimensional coordinate system, $S_{tx}$ may be transformed into $S_{tx}^{1\times N_{Tx}\times1}$, or $S_{tx}^{N_{Tx}\times1\times1}$, or $S_{tx}^{1\times1\times N_{Tx}}$; in a four-dimensional coordinate system, $S_{tx}$ may be transformed into $S_{tx}^{1\times1\times N_{Tx}\times1}$, or $S_{tx}^{1\times N_{Tx}\times1\times1}$, or $S_{tx}^{N_{Tx}\times1\times1\times1}$, or $S_{tx}^{1\times1\times1\times N_{Tx}}$, and so on. $N_{Tx}$ is a length of the transmit side spatial domain base vector, namely, a quantity of elements included in the transmit side spatial domain base vector

(5) $S_{rx}$: receive side spatial domain base vector. In a two-dimensional coordinate system, $S_{rx}$ may be transformed into $S_{rx}^{N_{Rx}\times1}$ or $S_{rx}^{1\times N_{Rx}}$; in a three-dimensional coordinate system, $S_{rx}$ may be transformed into $S_{rx}^{1\times N_{Rx}\times1}$, or $S_{rx}^{N_{Rx}\times1\times1}$, or $S_{rx}^{1\times1\times N_{Rx}}$; in a four-dimensional coordinate system, $S_{rx}$ may be transformed into $S_{rx}^{1\times1\times N_{Rx}\times1}$, or $S_{rx}^{1\times N_{Rx}\times1\times1}$, or $S_{rx}^{N_{Rx}\times1\times1\times1}$, or $S_{rx}^{1\times1\times1\times N_{Rx}}$, and so on. $N_{Rx}$ is a length of the receive side spatial domain base vector, namely, a quantity of elements included in the receive side spatial domain base vector.

For ease of understanding the technical solutions of this application, the following briefly describes some terms used in embodiments of this application.

1. Spatial domain base vector

In embodiments of this application, a spatial domain may include a transmit side spatial domain and a receive side spatial domain. The spatial domain base vector may be determined based on the transmit side spatial domain base vector and the receive side spatial domain base vector. Each transmit side spatial domain base vector may correspond to one transmit beam (beam) of a transmit end device. Each receive side spatial domain base vector may correspond to one receive beam (beam) of a receive end device.

The following provides description by using the transmit side spatial domain base vector as an example. The receive side spatial domain base vector is similar to the transmit side spatial domain base vector. The transmit side spatial domain base vector is usually associated with a transmit side antenna array. For example, many parameters in an expression of the transmit side spatial domain base vector may be understood as being used to represent different attributes of the transmit side antenna array. Therefore, for ease of understanding the transmit side spatial domain base vector in embodiments of this application, the following describes the transmit side spatial domain base vector with reference to the transmit side antenna array. Nevertheless, a person skilled in the art should understand that the transmit side spatial domain base vector in embodiments of this application is not limited only to a specific antenna array. In a specific implementation process, a proper antenna array may be selected based on a specific requirement, and various parameters related to the transmit side spatial domain base vector in embodiments of this application are set based on the selected antenna array.

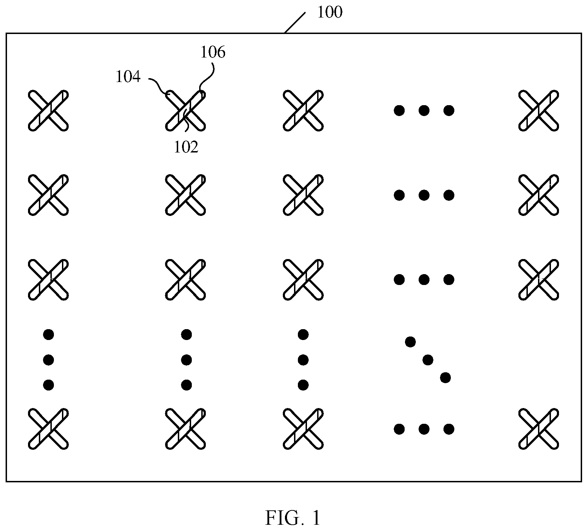

FIG. 1 is a schematic diagram of an antenna array 100 applicable to an embodiment of this application. As shown in FIG. 1, the antenna array 100 includes a plurality of element groups 102, and the element groups 102 are arranged in a matrix manner. Specifically, each row of the matrix includes a plurality of element groups 102, and each column of the matrix includes a plurality of element groups 102. Each element group 102 includes two elements, which are respectively an element 104 operating in a first polarization direction and an element 106 operating in a second polarization direction.

In a specific implementation process, the transmit side spatial domain base vector may be obtained based on a Kronecker product between two vectors, where the two vectors respectively represent spatial domain characteristics of two dimensions of the transmit side spatial domain. For example, with reference to FIG. 1, the two dimensions may be a dimension in which rows of the matrix formed by the element groups 102 shown in FIG. 1 are located and a dimension in which columns of the matrix formed by the element groups 102 shown in FIG. 1 are located.

In embodiments of this application, a dimension of the transmit side spatial domain base vector is $N_{Tx}$, that is, one transmit side spatial domain base vector includes $N_{Tx}$ elements. $N_{Tx}$ may be a quantity of transmit antenna ports of the transmit end device in one polarization direction. $N_{Tx} \geq 2$, and $N_{Tx}$ is an integer.

2. Frequency domain base vector

The frequency domain base vector is used to represent variation laws of a channel in frequency domain. The frequency domain base vector may be specifically used to represent variation laws of a weighting coefficient of each spatial domain base vector on each frequency domain unit. The variation laws represented by the frequency domain base vector are related to factors such as a multipath delay. It may be understood that, when a signal is transmitted by using a radio channel, the signal may have different transmission delays on different transmission paths. The variation laws of the channel in frequency domain that are caused by the different transmission delays may be represented by different frequency domain base vectors.

In embodiments of this application, a dimension of the frequency domain base vector is $N_f$, that is, one frequency domain base vector includes $N_f$ elements.

Optionally, the dimension of the frequency domain base vector may be equal to a quantity of frequency domain units on which CSI measurement needs to be performed. Because the quantity of frequency domain units on which CSI measurement needs to be performed may be different at different moments, the dimension of the frequency domain base vector may also be different. In other words, the dimension of the frequency domain base vector is variable.

Optionally, the dimension of the frequency domain base vector may alternatively be equal to a quantity of frequency domain units included in available bandwidth of a terminal. The available bandwidth of the terminal may be configured by a network device. The available bandwidth of the terminal is a part or all of system bandwidth. The available bandwidth of the terminal may also be referred to as a bandwidth part (bandwidth part, BWP). This is not limited in embodiments of this application.

Optionally, a length of the frequency domain base vector may alternatively be equal to a length of signaling used to indicate a to-be-reported location and quantity of frequency domain units. For example, the length of the frequency domain base vector may be equal to a quantity of bits of the signaling. For example, in new radio (new radio, NR), the signaling used to indicate the to-be-reported location and quantity of frequency domain units may be signaling used to report bandwidth (reporting band). The signaling may indicate, for example, in a bitmap form, the to-be-reported location and quantity of the frequency domain units. Therefore, the dimension of the frequency domain base vector may be a quantity of bits of the bitmap.

### 3. Time domain base vector

The time domain base vector is used to represent variation laws of a channel in time domain. That is, the time domain base vector is used to represent time variability of the channel. The time variability of the channel means that a transfer function of the channel changes with time. The time variability of the channel is related to factors such as a Doppler shift (Doppler shift).

In embodiments of this application, a dimension of the time domain base vector is $N_t$, that is, one time domain base vector includes $N_t$ elements.

Optionally, the dimension of the time domain base vector may be equal to a quantity of time units on which CSI measurement needs to be performed. It may be understood that, in different scenarios, the quantity of time units on which CSI measurement needs to be performed may be different, and therefore the dimension of the time domain base vector may also be different. In other words, the dimension of the time domain base vector is variable.

### 4. Superposition coefficient

The superposition coefficient is used to represent a weight of one or more of the frequency domain base vector, the time domain base vector, the transmit side spatial domain base vector, and the receive side spatial domain base vector during weighted summation. The superposition coefficient includes an amplitude and a phase. For example, the superposition coefficient is $ae^{j\theta}$, where $a$ is the amplitude, and $\theta$ is the phase.

Optionally, quantization processing is performed on the superposition coefficient fed back by the terminal to the network device, to reduce feedback overheads. It should be noted that, the amplitude (or in other words, a norm) of the superposition coefficient may be zero or close to zero. When the amplitude of these superposition coefficients whose amplitude is zero or approximately zero is quantized, a quantized value of the amplitude of the superposition coefficient may be zero. If the quantized value of the amplitude of the superposition coefficient is 0, the superposition coefficient may be referred to as a superposition coefficient whose amplitude is zero. Correspondingly, if the quantized value of the amplitude of the superposition coefficient is not 0, the superposition coefficient may be referred to as a superposition coefficient whose amplitude is not zero.

### 5. Reference signal, reference signal resource, and reference signal resource set

The reference signal includes but is not limited to a channel state information-reference signal (channel state information reference signal, CSI-RS). The reference signal resource corresponds to at least one of a time domain resource, a frequency domain resource, and a code domain resource of the reference signal. The reference signal resource set includes one or more reference signal resources.

For example, the reference signal resource is a CSI-RS resource. The CSI-RS resource may be classified into a non-zero power (non-zero power, NZP) CSI-RS resource and a zero power (zero power, ZP) CSI-RS resource.

The CSI-RS resource may be configured by using a CSI reporting setting (CSI reporting setting). The CSI reporting setting may configure a CSI-RS resource set used for channel measurement (channel measurement, CM). Optionally, the CSI reporting setting may further configure a CSI-RS resource set used for interference measurement (interference measurement, IM). Optionally, the CSI reporting setting may further configure a non-zero power CSI-RS resource set used for interference measurement.

The CSI reporting setting may be used to indicate a time domain behavior of CSI reporting, bandwidth of CSI reporting, a format corresponding to a report quantity (report quantity), and the like. The time domain behavior includes, for example, periodic (periodic), semi-persistent (semi-persistent), and aperiodic (aperiodic) time domain reporting behaviors. The terminal device may generate one CSI report based on one CSI reporting setting.

### 6. Channel state information (channel state information, CSI)

For example, the channel state information may include at least one of a precoding matrix indicator (precoding matrix indicator, PMI), a rank indicator (rank indication, RI), a channel quality indicator (channel quality indicator, CQI), a channel state information-reference signal resource indicator (CSI-RS resource indicator, CRI), and a layer indicator (layer indicator, LI).

The technical solutions provided in this application may be applied to various communications systems, for example, an internet of things (internet of things, IoT), a narrow band internet of things (narrow band internet of things, NB-IoT), long term evolution (long term evolution, LTE), or a fifth generation (5G) communications system, or an LTE and 5G hybrid architecture, or a 5G NR system, or a new communications system emerging in future communication development, or the like. The 5G communications system in this application may include at least one of a non-standalone (non-standalone, NSA) 5G communications system and a standalone (standalone, SA) 5G communications system. The communications system may alternatively be a public land mobile network (public land mobile network, PLMN) network, a device-to-device (device-to-device, D2D) network, a machine to machine (machine to machine, M2M) network, or another network.

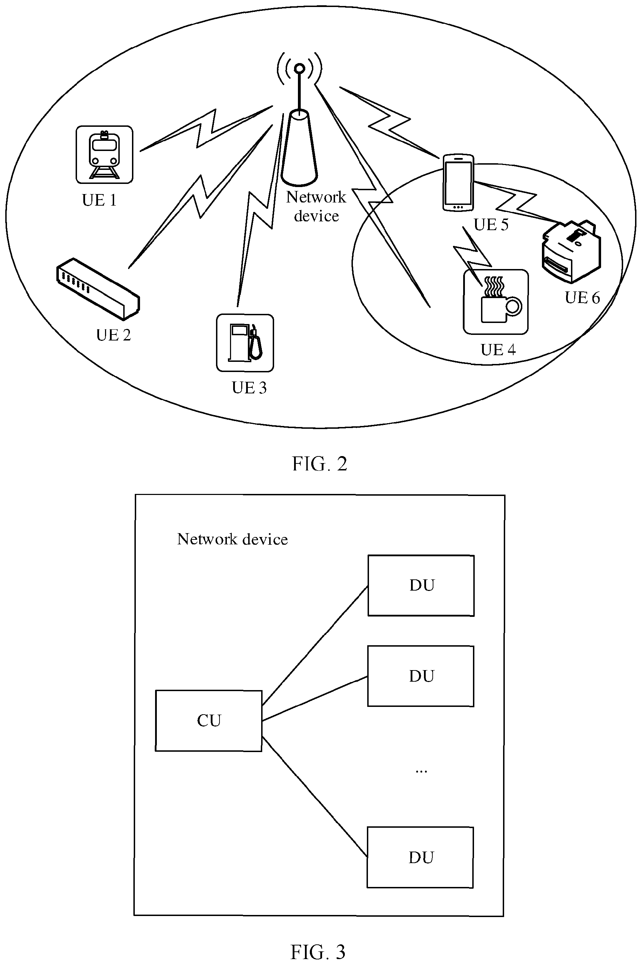

FIG. 2 shows a communications system according to an embodiment of this application. The communications system includes a network device and six terminal devices, for example, UE 1 to UE 6. In the communications system, the UE 1 to the UE 6 may send signals to the network device on an uplink, and the network device may receive the uplink signals sent by the UE 1 to the UE 6. In addition, the UE 4 to the UE 6 may also form a communications subsystem. The network device may send downlink signals to the UE 1, the UE 2, the UE 3, and the UE 5 on a downlink. The UE 5 may send signals to the UE 4 and the UE 6 on an inter-terminal link (sidelink, SL) based on a D2D technology. FIG. 2 is merely a schematic diagram. A type of the communications system, and a quantity, a type, and the like of devices included in the communications system are not specifically limited in this application.

The terminal device in embodiments of this application is an entity on a user side that is configured to receive or transmit a signal. The terminal device may be a device that provides voice and data connectivity for a user, for example, a handheld device or a vehicle-mounted device with a wireless connection function. The terminal device may alternatively be another processing device connected to a wireless modem. The terminal device may communicate with one or more core networks by using a radio access network (radio access network, RAN). The terminal device may also be referred to as a wireless terminal, a subscriber unit (subscriber unit), a subscriber station (subscriber station), a mobile station (mobile station), a remote station (remote station), an access point (access point), a remote terminal (remote terminal), an access terminal (access terminal), a user terminal (user terminal), a user agent (user agent), a user device (user device), user equipment (user equipment), or the like. The terminal device may be a mobile terminal, for example, a mobile phone (or also referred to as a "cellular" phone), and a computer that has a mobile terminal. For example, the terminal device may be a portable, pocket-size, handheld, computer built-in or in-vehicle mobile apparatus that exchanges voice or data with the radio access network. For example, the terminal device may alternatively be a device such as a personal communications service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). Common terminal devices include, for example, a mobile phone, a tablet computer, a notebook computer, a palmtop computer, a mobile internet device (mobile internet device, MID), and a wearable device, such as a smartwatch, a smart band, or a pedometer. However, embodiments of this application are not limited thereto. The terminal device in embodiments of this application may alternatively be a terminal device emerging in a future evolved PLMN, or the like. This is not limited in embodiments of this application.

In addition, in embodiments of this application, the terminal device may alternatively be a terminal device in an IoT system. The IoT is an important part of future information technology development. A main technical feature of the IoT is that objects are connected to a network by using a communications technology, to implement an intelligent network of human-machine interconnection and object-object interconnection. In embodiments of this application, the IoT technology may achieve, for example, by using a narrow band (narrow band, NB) technology, mass connection, deep coverage, and power saving for the terminal.

In addition, in embodiments of this application, the terminal device may further include a sensor such as an intelligent printer, a train detector, or a gas station. A main function of the terminal device includes: collecting data (for some terminal devices), receiving control information and downlink data of the network device, sending electromagnetic waves, and transmitting uplink data to the network device.

The network device in embodiments of this application is an entity on a network side that is configured to transmit or receive a signal. The network device in embodiments of this application may be a device in a wireless network, for example, a RAN node that connects the terminal to the wireless network. For example, the network device may be an evolved NodeB (evolutional NodeB, eNB or e-NodeB) in LTE, or may be a new radio controller (new radio controller, NR controller), may be a gNodeB (gNB) in a 5G system, may be a central unit (centralized unit, CU), may be a new radio base station, may be a radio remote unit, may be a micro base station, may be a relay (relay), may be a distributed unit (distributed unit, DU), may be a home base station, may be a transmission reception point (transmission reception point, TRP), or a transmission point (transmission point, TP), or any other radio access device. However, embodiments of this application are not limited thereto. The network device may cover one or more cells.

For example, a structure of the network device in embodiments of this application may be shown in FIG. 3. Specifically, a radio access network device may be divided into a CU and at least one DU. The CU may be configured to manage or control at least one DU, or in other words, the CU is connected to at least one DU. In this structure, protocol layers of the radio access network device in the communications system may be split, where some protocol layers are placed in the CU for central control, and functions of some or all of the remaining protocol layers are distributed in the DU, and the CU centrally controls the DU. For example, the radio access network device is a gNB. Protocol layers of the gNB include a radio resource control (radio resource control, RRC) layer, a service data adaptation protocol (service data adaptation protocol, SDAP) layer, a packet data convergence protocol (packet data convergence protocol, PDCP) layer, a radio link control (radio link control, RLC) layer, a media access control sublayer (media access control, MAC) layer, and a physical layer. For example, the CU may be configured to implement functions of the RRC layer, the SDAP layer, and the PDCP layer, and the DU may be configured to implement functions of the RLC layer, the MAC layer, and the physical layer. Protocol stacks included in the CU and the DU are not specifically limited in embodiments of this application.

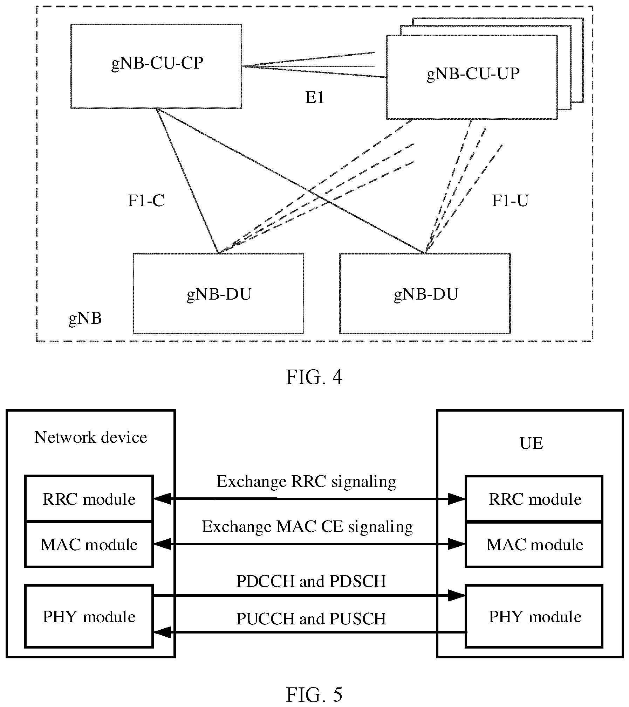

For example, the CU in embodiments of this application may be further divided into one control plane (CU-control plane, CU-CP) network element and a plurality of user plane (CU-user plane, CU-UP) network elements. The CU-CP may be used for control plane management, and the CU-UP may be used for user plane data transmission. An interface between the CU-CP and the CU-UP may be an E1 interface. An interface between the CU-CP and the DU may be F1-C, and is used for control plane signaling transmission. An interface between the CU-UP and the DU may be F 1-U, and is used for user plane data transmission. The CU-UP and the CU-UP may be connected by using an Xn-U interface to perform user plane data transmission. For example, a gNB is used as an example. A structure of the gNB may be shown in FIG. 4.

For example, communication between the network device and the UE may be shown in FIG. 5. The network device and the UE may exchange RRC signaling through an RRC module. The network device and the UE may exchange media access control control element (media access control control element, MAC CE) signaling through a MAC module. The network device and the UE may exchange uplink/downlink control signaling by using the PHY, for example, a physical uplink control channel (physical uplink control channel, PUCCH)/physical downlink control channel (physical downlink control channel, PDCCH), uplink/downlink data signaling, for example, a physical uplink shared channel (physical uplink shared channel, PUSCH)/physical downlink shared channel (physical downlink shared channel, PDSCH), and the like.

A network architecture and a service scenario described in embodiments of this application are intended to describe the technical solutions in embodiments of this application more clearly, and do not constitute any limitation on the technical solutions provided in embodiments of this application. A person of ordinary skill in the art may know that with evolution of the network architecture and emergence of a new service scenario, the technical solutions provided in embodiments of this application are also applicable to similar technical problems.

A 5G communications system has higher requirements on aspects such as system capacity and spectral efficiency. In the 5G communications system, a large-scale MIMO technology plays a critical role on spectral efficiency of the system. When the MIMO technology is used, the network device needs to perform modulation and coding and signal precoding when sending data to the UE. How the network device sends data to the UE needs to depend on CSI fed back by the UE to the network device. Therefore, accuracy of the CSI plays a very important role on system performance.

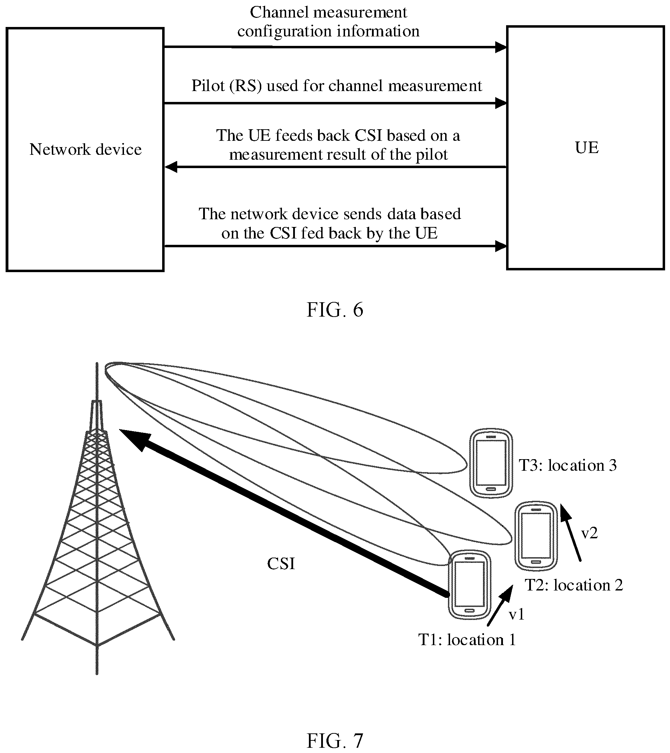

A basic flowchart of performing CSI measurement by the network device and the UE is shown in FIG. 6.

(1) The network device sends channel measurement configuration information to the UE, where the channel measurement configuration information is used for channel measurement configuration, for example, configuration of a reference signal and a measurement time.
(2) The network device sends a pilot (which may also be referred to as a downlink reference signal) to the UE, where the pilot is used for downlink channel measurement.
(3) The UE performs downlink channel measurement based on the pilot sent by the network device, performs calculation such as channel estimation, and feeds back CSI information (for example, by using a type II codebook in Release 15), including specific parameters such as a rank indicator (rank indicator, RI), a channel quality indicator (channel quality information, CQI), and a precoding matrix indicator (precoding matrix indicator, PMI).
(4) The network device calculates a precoding vector based on the CSI fed back by the UE, and sends data. In step (4), that the network device determines, based on the CSI information fed back by the UE in step (3), a related configuration for data transmission may be specifically: The network device determines, by using the RI, a quantity of flows of data to be transmitted to the UE, the network device determines, based on the CQI fed back by the UE, a modulation order and a channel coding code rate for data transmission to the UE, and the network device determines, based on the PMI fed back by the UE, precoder for data transmission to the UE.

In an actual system, there is usually a delay in CSI feedback, causing a problem of expiration of the CSI obtained by the base station. To be specific, there is a delay between the CSI that is fed back by the UE and that is obtained by the base station and CSI of a current real channel. Consequently, the precoder that is calculated by the base station based on the CSI fed back by the UE and that is used to send data is different from precoder calculated based on the real channel, causing a performance loss in data transmission. In a time-varying channel scenario, a delay in CSI feedback causes an obvious performance loss. For example, as shown in FIG. 7, the UE is located at a location 1 at a moment T1, the UE moves based on a speed and direction of $\vec{v1}$, and moves to a location 2 at a moment T2. Then, the UE moves based on a speed and direction of $\vec{v2}$, and moves to a location 3 at a moment T3, and channels corresponding to the UE at the location 1, the location 2, and the location 3 are different. Therefore, the CSI fed back by the UE at the moment T1 is inconsistent with channels at the location 2 and the location 3. The CSI expiration problem causes the precoder of the user to fail to match a real channel condition, and causes more inter-user interference. Consequently, system performance is greatly degraded.

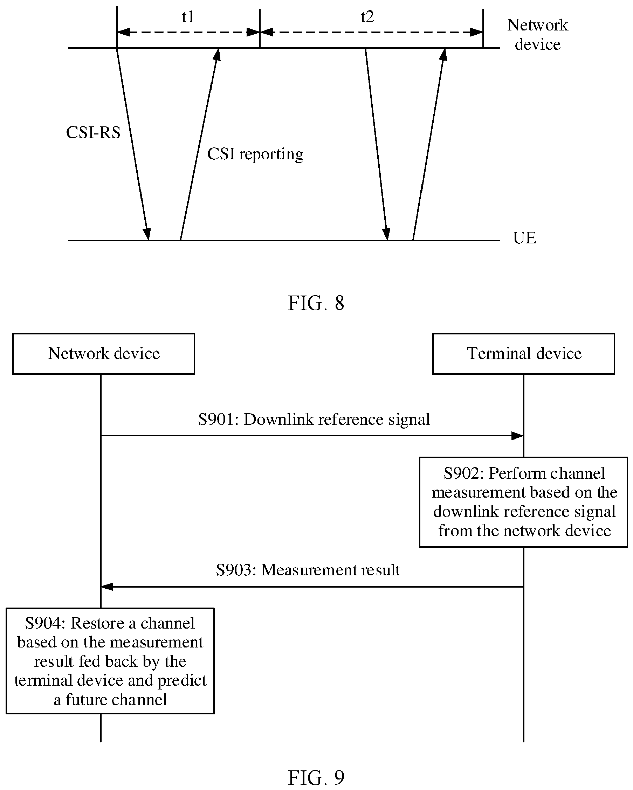

In a CSI feedback procedure in the conventional technology, the network device calculates a precoding matrix based on the CSI information reported by the UE, and the precoding matrix remains unchanged before next CSI reporting. That is, the network device calculates the precoding matrix by using the most recently reported CSI, and keeps the precoding matrix unchanged before a next CSI update, for example, as shown in FIG. 8.

It can be learned from the CSI measurement and feedback procedure in FIG. 8 that, in each CSI measurement and reporting periodicity, the network device assumes that the channel condition remains unchanged in the CSI reporting periodicity, and uses the most recently reported channel CSI as a basis for subsequent data transmission and precoding design. However, existence of a CSI effective delay t1 and a channel time variation t2 causes a problem of CSI expiration. The CSI effective delay t1 is mainly time between "the network device sends a downlink CSI-RS -> the UE receives a CSI-RS estimated channel -> the UE quantizes the estimated channel and feeds back uplink CSI -> the network device receives an uplink CSI feedback from the UE -> the network device calculates the precoding matrix based on the CSI fed back by the UE and uses the precoding matrix". Existence of the delay t1 causes a delay between a channel H1 when the network device delivers the CSI-RS and H2 that corresponds to the CSI reported by the UE. That is, there is already a delay between the reported CSI and the CSI of the current real channel. Usually, in a static scenario, t1 causes slight system performance degradation. However, when the channel changes rapidly with time, t1 causes CSI expiration, causing significant performance degradation. Channel time variation t2: The network device continuously uses, in the CSI feedback periodicity, the precoding matrix calculated based on the most recently reported CSI, that is, the precoding matrix is fixed within time t2. In other words, the network device assumes that the channel remains unchanged in the CSI feedback periodicity. However, when the channel changes with time, for example, in a mobile scenario, the channel also changes sharply within the time t2. This causes a mismatch between the precoding matrix calculated based on the most recent CSI reporting and the CSI of the real channel, causing performance degradation.

On this basis, embodiments of this application provide a measurement reporting method and apparatus, to resolve the foregoing problem. The method and an apparatus are based on a same inventive concept. Because the method and the apparatus have a similar problem-resolving principle, for implementations of the apparatus and the method, refer to each other. Repeated parts are not described again.

In the descriptions of this application, unless otherwise stated, "/" means "or", for example, A/B may represent A or B. The term "and/or" in this specification describes only an association relationship for describing associated objects and represents that three relationships may exist. For example, A and/or B may represent the following three cases: Only A exists, both A and B exist, and only B exists. "At least one" means one or more, and " a plurality of" means two or more. Terms such as "first" and " second" do not limit a quantity and an execution sequence, and the terms such as "first" and "second" do not indicate a definite difference.

It should be noted that, in embodiments of this application, the term such as "example" or "for example" is used to represent giving an example, an illustration, or descriptions. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

Third, in embodiments of this application, an example in which any vector (for example, a spatial domain base vector, a frequency domain base vector, or a time domain base vector) is a column vector is used for description. A unified description is provided herein, and details are not described below again. It may be understood that during specific implementation, the any vector may alternatively be a row vector A person skilled in the art should be able to reasonably infer, based on the technical solutions provided in this application without creative efforts, a corresponding technical solution when the any vector is a row vector, and this is not described herein again. Further, in a specific implementation process, a form of the vector used herein may be adjusted based on a specific requirement. For example, the vector is transposed, or the vector is represented as a conjugate form of the vector, or a combination of the foregoing manners, or another manner. Therefore, the foregoing inferences and adjustments should be understood as falling within the scope of embodiments of this application.

Fourth, in embodiments of this application, "used for indication" may include being used for direct indication and being used for indirect indication. For example, when a piece of indication information is described as being used to indicate information I, a case in which the indication information directly indicates I or indirectly indicates I may be included, but it does not mean that the indication information necessarily carries I.

The information indicated by the indication information is referred to as to-be-indicated information. In a specific implementation process, the to-be-indicated information is indicated in many manners. By way of example, and not limitation, the to-be-indicated information may be directly indicated, for example, the to-be-indicated information or an index of the to-be-indicated information. Alternatively, the to-be-indicated information may be indirectly indicated by indicating other information, where an association relationship exists between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, specified in a protocol), to reduce indication overheads to some extent. In addition, a common part of each piece of information may be further identified and indicated uniformly, to reduce indication overheads caused by separately indicating the same piece of information. For example, a person skilled in the art should understand that the precoding matrix includes precoding vectors, and the precoding vectors in the precoding matrix may have a same part in terms of composition or other attributes.

In addition, the specific indication manner may alternatively be various existing indication manners, for example without limitation to, the foregoing indication manners and various combinations thereof. For specific details of the indication manners, refer to the conventional technology. Details are not described herein again. It can be learned from the foregoing description that, for example, when a plurality of pieces of information of a same type need to be indicated, indication manners of different information may be different. In a specific implementation process, a required indication manner may be selected based on a specific requirement. The selected indication manner is not limited in embodiments of this application. In this way, the indication manner in embodiments of this application should be understood as covering various methods that enable a to-be-indicated party to learn of to-be-indicated information.

In addition, the to-be-indicated information may have other equivalent forms. For example, a row vector may be represented as a column vector, a matrix may be represented by using a transposed matrix of the matrix, and a matrix may alternatively be represented in a form of a vector or an array. The vector or array may be formed by connecting row vectors or column vectors of the matrix, and a Kronecker product between two vectors may be represented in a form such as a product between one vector and a transposed vector of the other vector. The technical solutions provided in embodiments of this application should be understood as covering various forms. For example, some or all of the features in embodiments of this application should be understood as covering various representations of the feature.

The to-be-indicated information may be sent as a whole, or may be divided into a plurality of pieces of sub-information for separate sending. In addition, sending periodicities and/or sending occasions of the sub-information may be the same or different. A specific sending method is not limited in this application. The sending periodicity and/or the sending occasion of the sub-information may be predefined, for example, predefined according to a protocol, or may be configured by a transmit end device by sending configuration information to a receive end device. The configuration information may include, for example without limitation to, one or a combination of at least two of radio resource control signaling, such as RRC signaling, MAC layer signaling such as MAC-CE signaling, and physical layer signaling such as downlink control information (downlink control information, DCI).

In embodiments of this application, the time unit may be a frame, a radio frame, a system frame, a subframe, a half-frame, a slot, a mini slot, a symbol, or the like.

The following specifically describes a measurement reporting method provided in this application with reference to the accompanying drawings.

FIG. 9 shows a measurement reporting method according to an embodiment of this application. The method may be applied to the communications system shown in FIG. 2. For ease of understanding, in this embodiment, description is provided from perspectives of both sides of a terminal device and a network device. It should be understood that this constitutes no limitation on this application. This application has improvements on either side of the terminal device and the network device. Specifically, the method may be applied to the terminal device and the network device, or may be applied to a chip or a chipset of the terminal device and the network device. The following provides description by using an example in which the method is applied to the terminal device and the network device. The measurement reporting method may specifically include the following steps.

S901: The network device sends a downlink reference signal to the terminal device. Correspondingly, the terminal device receives the downlink reference signal sent by the network device.

It may be understood that, the downlink reference signal may also be referred to as a reference signal, a pilot, a downlink pilot, a CSI pilot, or the like. For example, the downlink reference signal may be a reference signal such as a CSI-RS.

In an implementation, the network device may determine a sending periodicity (or a sending interval) of the downlink reference signal based on movement information of the terminal device. Optionally, the movement information of the terminal device may be sent by the terminal device to the network device.

For example, the movement information may include a movement speed, and the movement speed may include at least one of the following speeds: an absolute speed of the terminal device based on a geographical location, or a relative speed of the terminal device relative to the network device or another reference object.

For example, the sending periodicity of the downlink reference signal may be equal to 0.5 λ, where λ is a wavelength obtained through calculation based on the movement speed of the terminal device.

Manners of reporting the movement speed may include but are not limited to the following two manners:

In a first manner, a speed value is reported (in units such as km/h and m/s).

In a second manner, an index (index) is reported from a predefined candidate set, and the predefined candidate set may include several common speed values of constant-speed traveling, for example, 30 km/h, 60 km/h, 120 km/h, and 150 km/h. The terminal device may select a closest speed value based on a speed of the terminal device, so that reporting overheads can be reduced.

For example, the sending periodicity of the downlink reference signal may be equal to 0.5 λ, where λ is a wavelength obtained through calculation based on the movement speed and a movement direction of the terminal device.

For example, when a carrier frequency is 3.5 GHz, the wavelength corresponding to the movement speed of the terminal device may satisfy the following formula: $\lambda = \frac{c}{f} = \frac{3*10^8}{3.5*10^9} = 0.0857$ m=8.57 cm, where λ is the wavelength, c is the movement speed of the terminal device, and f is the carrier frequency. When the movement speed is 30 km/h, the sending periodicity of the downlink reference signal may be 5 ms. When the movement speed is 150 km/h, the sending periodicity of the downlink reference signal may be 1 ms. For example, a correspondence between the sending periodicity of the downlink reference signal and the movement speed of the terminal device may be shown in Table 1.

**Table 1**

| Sending periodicity of the downlink reference signal | Movement speed | Spacing between virtual antenna elements | Wavelength corresponding to the carrier frequency 3.5 GHz |
|---|---|---|---|
| 5 ms | 30 km/h | 4.2 cm | approximately 0.5 λ |
| 2.5 ms | 24 km/h | 1.6 cm | approximately 0.2 λ |
| 1 ms | 30 km/h | 0.8 cm | approximately 0.1 λ |

The movement information may further include a movement direction, for example, whether the terminal device moves along a straight line or an included angle of movement of the terminal device relative to a specific coordinate axis.

Manners of reporting the movement direction may include but are not limited to the following two manners:

In a first manner, an included angle relative to a standard north east west south (north east west south, NEWS) coordinate system (which may also be referred to as a standard coordinate system/Cartesian coordinate system) is reported, and the angle, longitude and latitude, or the like may be reported.

In a second manner, a direction relative to a geographical location of the network device is reported, and the angle, longitude and latitude, or the like may be reported.

In a possible implementation, the network device may configure Q times of downlink reference signal measurement for the terminal device, so that the terminal device can perform channel estimation based on the Q times of downlink reference signal measurement to obtain channels [H_1, H_2, H_3, ..., H_Q] at a plurality of moments. Q is an integer greater than 0.

In an implementation, the network device sends measurement configuration information to the terminal device, where the measurement configuration information configures Q resource sets (resource set), and one resource set corresponds to one time unit, or the measurement configuration information configures Q downlink reference signals, and one downlink reference signal corresponds to one time unit.

In another possible implementation, the network device may alternatively configure a measurement window in time domain for the terminal device, and the terminal device may perform channel estimation in the measurement window to obtain channels [H_1, H_2, H_3, ..., H_Q] at a plurality of moments.

S902: The terminal device performs channel measurement based on the downlink reference signal from the network device.

In an implementation, the terminal device may receive downlink reference signals at Q moments, obtain the channels [H_1, H_2, H_3, ..., H_Q] at the Q moments, and combine [H_1, H_2, H_3, ..., H_Q], to obtain a virtual antenna array channel H=[H_1, H_2, H_3, ..., H_Q].

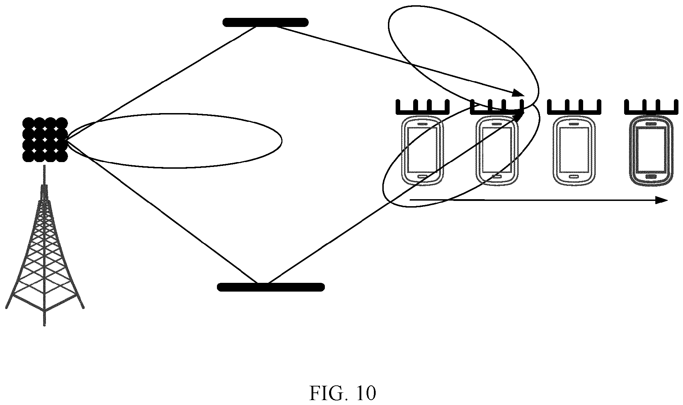

In the foregoing manner, the network device may control the sending periodicity of the downlink reference signals based on the movement information of the terminal device. In a movement process, the terminal device receives the downlink reference signals that are sent by the network device and that match the movement speed of the terminal device, and performs weighted combination on the downlink reference signals received at Q locations on a movement route. This is equivalent to weighting of array antennas with a specific spacing. For example, as shown in FIG. 10, the terminal device with four receive antennas performs weighted combination by using CSI of four movement locations, so that an array with "virtual" 4×4, that is, 16 receive antennas can be obtained. This is equivalent to increasing a quantity of receive apertures. Therefore, a multipath resolution capability of a receive end of the terminal device can be enhanced, an angle of arrival can be further enabled to be more accurately estimated, and resolution precision of a path is improved, to improve Doppler (Doppler) frequency estimation precision.

In some embodiments, the terminal device may calculate and feed back a plurality of components (for example, an RI/PMI/CQI) of the CSI based on Q CSI-RSs configured by the network device.

In an implementation, the terminal device may traverse all RIs based on channels of a plurality of time units, calculate a PMI corresponding to each RI, then calculate a CQI corresponding to each PMI, then calculate, based on a predefined mapping relationship, throughputs on the plurality of time units based on the RI/PMI/CQI, select a CQI corresponding to a largest throughput value and report the selected CQI, or select a PMI corresponding to the largest throughput value and report the selected PMI, or select an RI corresponding to the largest throughput value, and report the selected RI.

In another implementation, the terminal device may traverse all RIs based on channels of a plurality of time units, calculate a PMI corresponding to one of the RIs, and predict a PMI of a next feedback time unit, and obtain PMIs on all time units between the last received time unit and the next feedback time unit in a manner of interpolation, then calculate CQIs corresponding to all the PMIs, and then calculate, based on a predefined mapping relationship, throughputs on all the time units between the last time unit and the next feedback time unit based on one RI/PMI/CQI; select a CQI corresponding to a largest throughput value and report the selected CQI, or select a PMI corresponding to the largest throughput value and report the selected PMI, or select an RI corresponding to the largest throughput value and report the selected RI.

In still another implementation, the terminal device may select one RI based on channels of a plurality of time units, calculate PMIs corresponding to the RI on all time units, predict a PMI of a next feedback time unit, and obtain PMIs on all the time units between the last received time unit and the next feedback time unit in a manner of interpolation, and then calculate CQIs corresponding to all the PMIs, and report the calculated CQIs, or PMIs, or RIs.

S903: The terminal device reports a measurement result to the network device, where the measurement result indicates T resource elements and a superposition coefficient, the resource element is determined based on at least one of the following base vectors: a time domain base vector and a receive side spatial domain base vector, and T is an integer greater than 0. Correspondingly, the network device receives the measurement result.

For example, the measurement result may also be referred to as a feedback amount, a PMI feedback amount, indication information, or the like.

In an implementation, the terminal device may select, based on the virtual antenna array channel obtained in step S902, a base for reporting, that is, determine a base vector of the resource element.

It may be understood that the base vector for determining the resource element may be considered as a base vector corresponding to the resource element. For example, if the resource element is determined based on a time domain base vector, it may be considered that the time domain base vector is a base vector corresponding to the resource element.

For example, with respect to base vectors corresponding to the resource element, in addition to at least one of a time domain base vector and a receive side spatial domain base vector, the resource element may further correspond to another base vector, for example, a frequency domain base vector, a transmit side spatial domain base vector, or the like.

In an example for description, the transmit side spatial domain base vector, the receive side spatial domain base vector, the frequency domain base vector, or the time domain base vector may be an oversampling discrete fourier transform (discrete fourier transform, DFT) vector, and an expression is as follows:

$$\mathrm{b} = \left[ e^{j\frac{2\pi n}{OH}0} \quad e^{j\frac{2\pi n}{OH}1} \quad ... \quad e^{j\frac{2\pi n}{OH}(H-1)} \right],$$

where O is an oversampling rate, H is a length of the base vector, and a value range of n is 0 to OH-1.

For example, the transmit side spatial domain base vector, the frequency domain base vector, or the time domain base vector may be an orthogonal vector, or may be an orthogonal vector, that is, the oversampling rate O of the oversampling DFT vector may be 1 or may be greater than 1.

The receive side spatial domain base vector may be a non-orthogonal vector, that is, the oversampling rate O of the oversampling DFT vector may be greater than 1. In an implementation, a value of O may be related to a quantity of times of sending the downlink reference signal. For example, the oversampling rate O may be equal to the quantity Q of times of sending the downlink reference signal. For example, if the downlink reference signal is sent for four times, the oversampling rate O may be 4.

Optionally, before performing step S903, the terminal device may receive a feedback mode indication from the network device. The feedback mode indication is used to indicate that a feedback mode is CSI feedback of a plurality of time units. For example, the feedback mode indication may be dynamic signaling, for example, a MAC CE, or may be semi-static signaling, for example, RRC signaling. Alternatively, the feedback mode indication is used to indicate that a codebook type is a CSI feedback codebook of a plurality of time units. For example, the feedback mode indication may be an optional value of codebook type indication signaling.

The following describes the resource element by using examples with reference to different base vectors.

In a first example for description, the resource element may be determined based on the frequency domain base vector, the time domain base vector, the receive side spatial domain base vector, and the transmit side spatial domain base vector, and the superposition coefficient is a superposition coefficient corresponding to the T resource elements, or it may be understood that the measurement result includes: the frequency domain base vector, the time domain base vector, the receive side spatial domain base vector, and the transmit side spatial domain base vector, and the superposition coefficient corresponding to the resource element.

In the foregoing manner, the channel feature of the channel in the angle domain can be more accurately reflected by using the receive side spatial domain base vector and the transmit side spatial domain base vector, and the time variant feature of the channel can be reflected by using the time domain base vector. In the foregoing solution, compression feedback is performed on the channel in four dimensions: the frequency domain base vector, the time domain base vector, the receive side spatial domain base vector, and the transmit side spatial domain base vector, so that more accurate channel prediction can be performed.

The resource element may be a matrix or a vector. It may be understood that, the matrix and the vector may be mutually converted, and may be both determined based on a same base vector. Therefore, it may also be understood that the matrix is equivalent to the vector

The following provides description by using a matrix as an example. The terminal device may perform feedback based on a codebook of the following first structure:

$$H^{N_{Tx} \times N_{Rx} \times N_f \times N_t} = \sum_{l=0}^{L-1} \sum_{m=0}^{M-1} \sum_{f=0}^{K-1} \sum_{t=0}^{N-1} a_{stx,srx,f,t} S_{tx(l)}^{N_{Tx} \times 1 \times 1 \times 1} \otimes S_{rx(m)}^{1 \times N_{Rx} \times 1 \times 1} \otimes F_f^{1 \times 1 \times N_f \times 1} \otimes$$

$$T_t^{1 \times 1 \times 1 \times N_t},$$

where $H^{N_{Tx} \times N_{Rx} \times N_f \times N_t}$ is the channel, $L$ is a quantity of beams in transmit side spatial domain, $M$ is a quantity of beams in receive side spatial domain, $K$ is a quantity of beams in frequency domain, $N$ is a quantity of beams in time domain, $a_{stx,srx,f,t}$ is the superposition coefficient corresponding to the T resource elements, $S_{tx(l)}^{N_{Tx} \times 1 \times 1 \times 1}$ is the $l^{th}$ transmit side spatial domain base vector with a dimension of $N_{Tx} \times 1 \times 1 \times 1$, $S_{rx(m)}^{1 \times N_{Rx} \times 1 \times 1}$ is the $m^{th}$ receive side spatial domain base vector with a dimension of $1 \times N_{Rx} \times 1 \times 1$, $F_f^{1 \times 1 \times N_f \times 1}$ is the $f^{th}$ frequency domain base vector with a dimension of $1 \times 1 \times N_f \times 1$, $T_t^{1 \times 1 \times 1 \times N_t}$ is the $t^{th}$ time domain base vector with a dimension of $1 \times 1 \times 1 \times N_t$, $N_{Tx}$ is a length of the transmit side spatial domain base vector, $N_{Rx}$ is a length of the receive side spatial domain base vector, $N_f$ is a length of the frequency domain base vector, $N_t$ is a length of the time domain base vector, and $\otimes$ is a Kronecker product.

In an implementation, $N_{Tx}$ may be equal to a quantity of transmit antennas of the network device, and $N_{Rx}$ may be equal to a quantity of receive antennas of the terminal device. $N_{Tx}$ may be equal to a quantity of transmit antennas actually deployed by the network device, or may be equal to a quantity of transmit antennas in a virtual antenna array equivalently obtained by the network device. $N_{Rx}$ may be equal to a quantity of receive antennas actually deployed by the terminal device, or may be equal to a quantity of receive antennas in a virtual antenna array equivalently obtained by the terminal device. $N_f$ may be equal to a quantity of frequency domain resources, and $N_t$ may be equal to a quantity of time domain resources.

Optionally, the network device may send reporting configuration information to the terminal device, and the reporting configuration information may indicate values of L, M, K, and N.

Optionally, vector lengths such as $N_f$, $N_t$, $N_{Tx}$, and $N_{Rx}$ may be indicated by the network device to the terminal device. For example, the vector lengths may be indicated by using dynamic signaling (for example, a MAC CE) or semi-static signaling (for example, RRC signaling), or may be indicated through joint coding with some signaling.

In an implementation, the resource element may be determined based on the frequency domain base vector, the time domain base vector, and the spatial domain base vector. The spatial domain base vector may be determined based on the transmit side spatial domain base vector and the receive side spatial domain base vector. Optionally, the spatial domain base vector may be determined based on a horizontal component of the transmit side spatial domain base vector, a vertical component of the transmit side spatial domain base vector, and the receive side spatial domain base vector. For example, the spatial domain base vectors may satisfy the following formulas:

$$S = b_{rx} \otimes b_H \otimes b_V = \left[ b_H \otimes b_V e^{j\frac{2\pi n1}{O_{rx}N_{Rx}}0} \quad b_H \otimes b_V e^{j\frac{2\pi n1}{O_{rx}N_{Rx}}1} \quad ... \quad b_H \otimes b_V e^{j\frac{2\pi n1}{O_{rx}N_{Rx}}(N_{Rx}-1)} \right]$$

$$b_H \otimes b_V = \left[ b_V e^{j\frac{2\pi n2}{O_H N_H}0} \quad b_V e^{j\frac{2\pi n2}{O_H N_H}1} \quad ... \quad b_V e^{j\frac{2\pi n2}{O_H N_H}(N_H-1)} \right]$$

$$b_V = \left[ e^{j\frac{2\pi m}{O_V N_V}0} \quad e^{j\frac{2\pi m}{O_V N_V}1} \quad ... \quad e^{j\frac{2\pi m}{O_V N_V}(N_V-1)} \right]$$

$$N_H \times N_V = N_{tx}$$

where $b_{rx}$ is the receive side spatial domain base vector, $b_H$ is the horizontal component of the transmit side spatial domain base vector, $b_V$ is the vertical component of the transmit side spatial domain base vector, $O_{rx}$ is an oversampling rate of the receive side spatial domain base vector, $N_{Rx}$ is a length of the receive side spatial domain base vector, a value range of n1 is 0 to $O_{rx}N_{Rx}-1$, $O_H$ is an oversampling rate of the horizontal component of the transmit side spatial domain base vector, $N_H$ is a length of the horizontal component of the transmit side spatial domain base vector, a value range of n2 is 0 to $O_H N_H-1$, $O_V$ is an oversampling rate of the vertical component of the transmit side spatial domain base vector, $N_V$ is a length of the vertical component of the transmit side spatial domain base vector, and a value range of m is 0 to $O_V N_V-1$.

The following provides description by using a vector as an example. The terminal device may perform feedback based on a codebook of the following second structure:

$$H^{N_{all}\times 1} = \sum_{m=0}^{R-1} \alpha_m V^{N_{all}\times 1},$$

where $H^{N_{all}\times 1}$ is the channel, $V^{N_{all}\times 1} = S_{rx}^{N_{Rx}\times 1} \otimes S_{tx}^{N_{Tx}\times 1} \otimes F^{N_f\times 1} \otimes T^{N_t\times 1}$, $N_{all}=N_{rx} \times N_{tx} \times N_f \times N_t$, R is a quantity of beams in transmit side spatial domain, receive side spatial domain, frequency domain, and time domain, $\alpha_m$ is the superposition coefficient corresponding to the T resource elements, $S_{tx}^{N_{Tx}\times 1}$ is the transmit side spatial domain base vector with a dimension of $N_{TX}\times 1$, $S_{rx}^{N_{Rx}\times 1}$ is the receive side spatial domain base vector with a dimension of $N_{Rx}\times 1$, $F^{N_f\times 1}$ is the frequency domain base vector with a dimension of $N_f \times 1$, $T^{N_t\times 1}$ is the time domain base vector with a dimension of $N_t \times 1$, $N_{Tx}$ is a length of the transmit side spatial domain base vector, $N_{Rx}$ is a length of the receive side spatial domain base vector, $N_f$ is a length of the frequency domain base vector, $N_t$ is a length of the time domain base vector, and $\otimes$ is a Kronecker product.

In an implementation, $N_{Tx}$ may be equal to a quantity of transmit antennas of the network device, and $N_{Rx}$ may be equal to a quantity of receive antennas of the terminal device. $N_{Tx}$ may be equal to a quantity of transmit antennas actually deployed by the network device, or may be equal to a quantity of transmit antennas in a virtual antenna array equivalently obtained by the network device. $N_{Rx}$ may be equal to a quantity of receive antennas actually deployed by the terminal device, or may be equal to a quantity of receive antennas in a virtual antenna array equivalently obtained by the terminal device. $N_f$ may be equal to a quantity of frequency domain resources, and $N_t$ may be equal to a quantity of time domain resources.

Optionally, the network device may send reporting configuration information to the terminal device, and the reporting configuration information may indicate a value of R.

It may be understood that, the foregoing two codebook structures are merely examples for description. During specific implementation, the foregoing codebook structures may be further transformed. For example, the resource element may be a Kronecker product between the frequency domain base vector, the time domain base vector, the receive side spatial domain base vector, and the transmit side spatial domain base vector. In addition, the resource element may further use the following matrix or an equivalent vector of the following matrix: a product between a first Kronecker product, the receive side spatial domain base vector, and the transmit side spatial domain base vector. The first Kronecker product is a Kronecker product between the frequency domain base vector and the time domain base vector, that is, an $S_{tx}S_{rx}(F \otimes T)$ matrix

Alternatively, the resource element may further use the following matrix or an equivalent vector of the following matrix: a product between a second Kronecker product and the time domain base vector. The second Kronecker product is a Kronecker product between the receive side spatial domain base vector, the transmit side spatial domain base vector, and the frequency domain base vector, that is, an $(S_{tx} \otimes S_{rx} \otimes F)T$ matrix

Alternatively, the resource element may further use the following matrix or an equivalent vector of the following matrix: a product between a fifth Kronecker product and the frequency domain base vector. The fifth Kronecker product is a Kronecker product between the receive side spatial domain base vector, the transmit side spatial domain base vector, and the time domain base vector, that is, an $F(S_{tx} \otimes S_{rx} \otimes T)$ matrix.

Alternatively, the resource element may further use the following matrix or an equivalent vector of the following matrix: a product between a third Kronecker product and the transmit side spatial domain base vector. The third Kronecker product is a Kronecker product between the receive side spatial domain base vector, the frequency domain base vector, and the time domain base vector, that is, an $S_{tx}(S_{rx} \otimes F \otimes T)$ matrix.

Alternatively, the resource element may further use the following matrix or an equivalent vector of the following matrix: a product between a fourth Kronecker product and the receive side spatial domain base vector. The fourth Kronecker product is a Kronecker product between the transmit side spatial domain base vector, the frequency domain base vector, and the time domain base vector, that is, an $S_{rx}(S_{tx} \otimes F \otimes T)$ matrix, or the like. Superposition coefficients corresponding to the foregoing matrices may be taken from $N_{rx} \times N_{tx} \times N_t \times N_t$ superposition coefficients.

In a second example for description, the resource element may be determined based on the frequency domain base vector, the receive side spatial domain base vector, and the transmit side spatial domain base vector, the measurement result further indicates the time domain base vector, the superposition coefficient is a superposition coefficient corresponding to the time domain base vector, and the superposition coefficient corresponding to the time domain base vector is determined based on a superposition coefficient corresponding to the T resource elements. Alternatively, it may be understood that, the measurement result includes: the frequency domain base vector, the time domain base vector, the receive side spatial domain base vector, and the transmit side spatial domain base vector, and the superposition coefficient corresponding to the time domain base vector. In the foregoing manner, the channel feature of the channel in the angle domain can be more accurately reflected by using the receive side spatial domain base vector and the transmit side spatial domain base vector, and a channel time variation is estimated based on a high-precision Doppler frequency, to improve prediction precision of the channel in time domain.

In an implementation, the terminal device may determine the superposition coefficient corresponding to the resource element according to the following formula:

$$\mathrm{H}_n = \sum_{k=1}^{K} \sum_{m=1}^{M} \sum_{l=1}^{L} c_n^{k,l,m} S_k^{tx} \otimes S_m^{rx} \otimes \mathrm{F}_l,$$

where $L$ is the quantity of beams in transmit side spatial domain, $M$ is the quantity of beams in receive side spatial domain, $K$ is the quantity of beams in frequency domain, $N$ is the quantity of beams in time domain, and $S_k^{tx}$ is the $k^{th}$ transmit side spatial domain base vector set, which may include transmit side spatial domain base vectors corresponding to the channel at Q moments, where Q is a quantity of times of sending the downlink reference signal. $S_m^{rx}$ is the $m^{th}$ receive side spatial domain base vector set, which may include receive side spatial domain base vectors corresponding to the channel at the Q moments. $F_l$ is the $l^{th}$ frequency domain base vector set, which may include frequency domain base vectors corresponding to the channel at the Q moments. $c_n^{k,l,m}$ is the superposition coefficient corresponding to the resource element.

For example, $S_k^{tx}$ may be a DFT matrix of $N_{Tx}*N_{Tx}$, that is, $S_k^{tx}$ may include a plurality of base vectors with a dimension of $N_{Tx}*1$. Each base vector belongs to $\{S_k^{tx}\}_{1,...,K}$, where $K \leq N_{Tx}$. F may be a DFT matrix of $N_f*N_f$, F may include a plurality of base vectors with a dimension of $N_f*1$. Each base vector belongs to $\{F_l\}_{l=1,...,L}$, where $L \leq N_f$. To be specific, the transmit side spatial domain base vector and the frequency domain base vector may be selected from an orthogonal base combination.

For example, $S_m^{rx}$ may be an oversampling DFT matrix of $N_{Rx}*(O*N_{Rx})$, and an oversampling multiple (O) may be related to a quantity Q of times of sending the downlink reference signal, or to a quantity of times of pilot measurement. For example, the oversampling multiple (O) may be equal to the quantity Q of times of sending the downlink reference signal, or to a quantity of times of sending a measurement pilot. $S_m^{rx}$ may include a plurality of base vectors with a dimension of $N_{Rx}*1$, and each base vector belongs to $\{S_m^{rx}\}_{m=1,...,M}$. $M \leq O*N_{Rx}$, that is, an oversampling DFT with a multiple of O.

The terminal device may receive Q downlink reference signals, to obtain superposition coefficients of the resource element that are obtained through measurement for a plurality of times, that is, $C^{stx,srx,f} = [C_1^{stx,srx,f}, C_2^{stx,srx,f}, ..., C_Q^{stx,srx,f}]^T$. $C^{stx,srx,f}$ is the superposition coefficient corresponding to the T resource elements, and $C^{stx,srx,f}$ may be a $Q \times 1$ vector. The resource element is determined based on the frequency domain base vector (*f*), the receive side spatial domain base vector (*srx*), and the transmit side spatial domain base vector (*stx*). $[]^T$ represents transposition of the matrix

For $C^{stx,srx,f}$, the terminal device may perform mapping by using a plurality of time domain base vectors, to obtain a corresponding superposition coefficient $d^{stx,srx,f}$ on the plurality of time domain base vectors. For ease of description, in the following, the superposition coefficient corresponding to $C^{stx,srx,f}$ on the plurality of time domain base vectors is referred to as a time domain coefficient vector of the resource element. The time domain coefficient vector may satisfy the following formula:

$$d^{stx,srx,f} = C^{stx,srx,f} D^* = [d_1^{stx,srx,f}, d_2^{stx,srx,f}, ..., d_Q^{stx,srx,f}],$$

where $d^{stx,srx,f}$ is the time domain coefficient vector, $C^{stx,srx,f}$ is the superposition coefficient corresponding to the resource element, $D^*$ is the plurality of time domain base vectors, and Q is the quantity of times of sending the downlink sending signal.

For example, the plurality of time domain base vectors may be a Doppler codebook. In an implementation, the Doppler codebook may be a $Q \times Q$ matrix (for example, a DFT matrix or a wavelet matrix) negotiated between the network device and the terminal, and Q is the quantity of times of sending the downlink reference signal. For example, for a DFT form, the pth time domain base vector in the Doppler codebook may be $D_p = [e^{-j2\pi \times 0 \times p/Q}, e^{-j2\pi \times 1 \times p/Q}, ..., e^{-j2\pi \times (Q-1) \times p/Q}]^T$, p = 0, ..., Q - 1. $C^{stx,srx,f}$ may be represented as weighted superposition of a plurality of Doppler base vectors (that is, time domain base vectors), that is, $C^{stx,srx,f} = \sum_p^P d_p^{stx,srx,f} D_p$, where a Doppler coefficient $d_p^{stx,srx,f}$ may be understood as a superposition coefficient of the time domain base vector.

Optionally, the time domain base vector may use any one of the following several configuration solutions, but is not limited thereto:

Solution 1: The time domain base vector may use an orthogonal/non-orthogonal base, for example, DFT or discrete cosine transform (discrete cosine transform, DCT), or a wavelet base.
Further, the terminal device may feed back a subscript and a superposition coefficient of the time domain base vector. For a plurality of resource elements, the terminal device may feed back same time domain base vectors and same superposition coefficients. Alternatively, the terminal device may feed back same time domain base vectors and different superposition coefficients. Alternatively, the terminal device may feed back independent time domain base vectors and independent superposition coefficients.
Solution 2: The network device may independently configure a plurality of time domain base vectors (different base lengths/dimensions, orthogonal/non-orthogonal, different quantization precision, and different quantities of maximum superposition coefficients), and different beam-delay points (Beam-Delay points) may correspond to different time domain base vectors. The terminal device may report {a time domain base vector index, base vectors corresponding to resource elements, a quantity of superposition coefficients, and quantization precision} for each beam-delay point.
Solution 3: The network device may indicate a maximum of N beam-delay points (Beam-Delay points), and configure a sequence of the N beam-delay points according to a predefined rule. The terminal device may feed back, based on the sequence, superposition coefficients corresponding to corresponding time domain base vectors and the time domain base vectors.
For example, different beam-delay points may use same or different time domain base vectors. Alternatively, time domain base vectors of different beam-delay points or superposition coefficients corresponding to the time domain base vectors may be the same. Alternatively, time domain base vectors of different beam-delay points or superposition coefficients corresponding to the time domain base vectors may be independently fed back.
Solution 4: The network device may indicate a range of beam-delay points (Beam-Delay points) of the terminal device, and indicate to feed back a maximum of N beam-delay points (Beam-Delay points). The terminal device may feed back corresponding {indexes of a maximum of N beam-delay points, superposition coefficients corresponding to time domain base vectors, time domain base vectors, and time domain base vector indexes}.

For example, different beam-delay points may use same or different time domain base vectors. Alternatively, time domain base vectors of different beam-delay points or superposition coefficients corresponding to the time domain base vectors may be the same. Alternatively, time domain base vectors of different beam-delay points or superposition coefficients corresponding to the time domain base vectors may be independently fed back.

Optionally, when reporting the time domain base vector, the terminal device may report an index of the time domain base vector, for example, a subscript of the time domain base vector

Based on the second example for description, the network device may reconstruct a channel time-varying characteristic based on the measurement result fed back by the terminal device, to predict a future channel.

For example, it is assumed that the quantity of times of sending the downlink reference signal is 3. Based on $[d_{p1}^{stx,srx,f}, d_{p2}^{stx,srx,f}, d_{p3}^{stx,srx,f}]$, and subscripts p1, p2, and p3 of the time domain base vectors that are reported by the terminal device, the network device fills $[d_{p1}^{stx,srx,f}, d_{p2}^{stx,srx,f}, d_{p3}^{stx,srx,f}]$ into a matrix $\overline{d}^{stx,srx,f} = [..., d_{p1}^{stx,srx,f}, ..., d_{p2}^{stx,srx,f}, ..., d_{p3}^{stx,srx,f}, ...]$ with a same dimension as $\{D_p^H\}_{p=0,...,Q-1}$, where ... are filled values. Therefore, based on the time domain base vector $\{D_p^H\}_{p=0,...,Q-1}$, the network device may restore the superposition coefficient $\overline{C}^{stx,srx,f}$ corresponding to the T resource elements, where $\overline{C}^{stx,srx,f} = D\overline{d}^{stx,srx,f}$, or $\overline{C}^{stx,srx,f} = \sum_p^P \overline{d}_p^{stx,srx,f} D_p$.

In an implementation, the network device may predict subsequent $\overline{C}_{n+1}^{stx,srx,f}$ based on $\overline{C}^{stx,srx,f}$, and determine a channel based on $\overline{C}_{n+1}^{stx,srx,f}$.

In another implementation, the base station may first obtain {H_1, ..., H_Q} based on $\overline{C}^{stx,srx,f}$ and then predict a subsequent channel based on {H_1, ... , H_Q}. For example, the network device may perform prediction by using an augmented reality (augmented reality, AR) model. Because a historical channel of the time-varying channel is correlated with the subsequent channel, the future channel can be accurately predicted based on {H_1, ..., H_Q}.

The correlation between the historical channel of the time-varying channel and the subsequent channel may be represented as several slowly varying or invariant coefficients, and the channel at any moment may be represented as weighting of specific coefficients (a_1, ..., a_n) of the channel at n previous moments. According to the following formula, the network device may obtain the superposition coefficients (a_1, ..., a_n) based on known $\overline{C}^{stx,srx,f}$, and then predict the subsequent channel. An example is as follows:

$$\begin{bmatrix} c_1 & c_2 & ... & c_n \\ c_2 & c_3 & ... & c_{n+1} \\ c_3 & c_4 & ... & c_{n+2} \end{bmatrix} \begin{bmatrix} a_1 \\ a_2 \\ a_3 \end{bmatrix} = \begin{bmatrix} c_{n+1} \\ c_{n+2} \\ c_{n+3} \end{bmatrix}$$

In some embodiments, the terminal device may further independently feed back one or more $\overline{C}^{stx,srx,f}$, to supplement the CSI of the network device in the measurement process. The network device may calibrate the restored channel based on the $\overline{C}^{stx,srx,f}$.

By using the foregoing steps, the network device may obtain a coefficient matrix $C_{n+g}$ formed by superposition coefficients corresponding to $N_t$ resource elements at n+g moments, where n is equal to $N_t$, and g≥0, and obtain a channel matrix $H_{n+g} = S^{Rx}S^{Tx}C_{n+g}F^H$ by using the resource elements, where $S^{Rx}$ is the receive side spatial domain base vector, $S^{Tx}$ is the transmit side spatial domain base vector, and $F^H$ is the frequency domain base vector By using an example in which g is equal to 1, $H_{n+1} = \sum_{k=1}^K \sum_{m=1}^M \sum_{l=1}^L c_{n+1}^{k,l,m} s_k^{tx} \otimes s_m^{rx} \otimes F_l$, where $c_{n+1}^{k,l,m}$ is K*L*M superposition coefficients, $\{S_k^{tx}\}_{k=1,...,K}$ and $\{F_l\}_{l=1,...,L}$ are respectively a transmit side spatial domain base vector set and a frequency domain base vector set, which may respectively have dimensions of $N_{Tx}$ and $N_f$, and respectively include K base vectors and L base vectors (K≤$N_{Tx}$, L≤$N_f$); $\{S_m^{rx}\}_{m=1,...,M}$ is a receive side spatial domain base vector set with a dimension of $N_{Rx}$, and includes M base vectors (M≤O*$N_{Rx}$, that is, an oversampling DFT with a multiple of O, and O may be related to the quantity of times of sending the pilot). The network device may calculate precoder of a future moment g by using

$H_{n+g}$, for data transmission.

In a third example for description, the resource element may be determined based on the frequency domain base vector, the time domain base vector, and the transmit side spatial domain base vector, and the superposition coefficient is a superposition coefficient corresponding to the T resource elements. In this example, a feedback codebook is similar to the feedback codebook in the first example for description, and the difference lies in that a base of the feedback codebook in the third example for description is the frequency domain base vector, the time domain base vector, and the transmit side spatial domain base vector, but in the first example for description, the base of the feedback codebook is the frequency domain base vector, the time domain base vector, the receive side spatial domain base vector, and the transmit side spatial domain base vector Repeated parts are not described again.

In a fourth example for description, the resource element may alternatively be determined based on the frequency domain base vector, the receive side spatial domain base vector, and the transmit side spatial domain base vector, and the superposition coefficient is a superposition coefficient corresponding to the T resource elements. The channel feature of the channel in the angle domain can be more accurately reflected by using the receive side spatial domain base vector and the transmit side spatial domain base vector. In the foregoing solution, compression feedback is performed on the channel in four dimensions: the frequency domain base vector, the receive side spatial domain base vector, and the transmit side spatial domain base vector, so that more accurate channel prediction can be performed. In this example, a feedback codebook is similar to the feedback codebook in the first example for description, and the difference lies in that a base of the feedback codebook in the fourth example for description is the frequency domain base vector, the receive side spatial domain base vector, and the transmit side spatial domain base vector, but in the first example for description, the base of the feedback codebook is the frequency domain base vector, the time domain base vector, the receive side spatial domain base vector, and the transmit side spatial domain base vector Repeated parts are not described again.

In a fifth example for description, the resource element may be determined based on the time domain base vector, and the superposition coefficient is the superposition coefficient corresponding to the time domain base vector

In a possible implementation, in the fifth example for description, the superposition coefficient corresponding to the time domain base vector may be determined based on a superposition coefficient of a codebook. For example, $C^{stx,srx,f} = \sum_p^P d_p^{stx,srx,f} D_p$ may be combined with one or more other bases, to represent a channel, for example,

$$H = \sum_i^I \sum_p^P d_p^i D_p u_{1,i} \qquad H = \sum_j^J \sum_i^I \sum_p^P d_p^{i,j} D_p u_{1,i} u_{2,j}^*$$. $u_{1,i}$ and $u_{2,j}^*$ may be other base vectors such as a base vector of type II, a base vector of double-domain compression of Release 16, a base vector of partial reciprocity of Release 17, or the like. I is a quantity of $u_{1,i}$, $D_p$ is the time domain base vector, dp is the superposition coefficient of the time domain base vector $D_p$, J is a quantity of $u_{2,j}^*$, $d_p^{i,j}$ is the superposition coefficient of the time domain base vector $D_p$, and P is a quantity of time domain base vectors. For a specific process, refer to the process of determining the superposition coefficient of the time domain base vector based on the superposition coefficient of the resource element in the second example for description. Details are not described herein again.

In the fifth example for description, the terminal device may report the superposition coefficient of the time domain base vector to the network device, that is, the measurement result may include the superposition coefficient of the time domain base vector.

In an implementation, when reporting the superposition coefficient of the time domain base vector, the terminal device may select P superposition coefficients with highest energy from $d^{stx,srx,f}$ for reporting. For example, the terminal device may determine, in $d^{stx,srx,f}$, that the coefficients with highest energy are $[d_{p1}^{stx,srx,f}, d_{p2}^{stx,srx,f}, d_{p3}^{stx,srx,f}]$, and report $[d_{p1}^{stx,srx,f}, d_{p2}^{stx,srx,f}, d_{p3}^{stx,srx,f}]$ to the network device. During specific implementation, P may be configured by the network device, or may be prescribed by a protocol.

In some embodiments of the fifth example for description, the resource element and Doppler information (including the time domain base vector and the superposition coefficient corresponding to the time domain base vector) may be carried in same signaling for reporting, or may be carried in different signaling for reporting.

Optionally, when reporting the time domain base vector, the terminal device may report the time domain base vectors $[D_{p1}, D_{p2}, D_{p3}]$ corresponding to the superposition coefficients $[d_{p1}^{stx,srx,f}, d_{p2}^{stx,srx,f}, d_{p3}^{stx,srx,f}]$.

In some embodiments, before reporting the superposition coefficient of the resource element, the terminal device may separately perform amplitude quantization and phase quantization on the superposition coefficient of the resource element.

In some embodiments, the network device may independently configure a plurality of groups of quantization precision information. For example, the quantization precision information may include a maximum quantity of superposition coefficients of resource elements, quantization precision of superposition coefficients of resource elements, and the like.

Optionally, the terminal device may select different quantization precision information for different time domain base vectors (or may also be referred to as Doppler components), that is, quantization precision information corresponding to each time domain base vector may be independently configured. For example, for a strong time domain base vector, a large quantity of reported superposition coefficients of resource elements may be used, and high quantization precision may be used for the superposition coefficients of the resource elements. For a weak time domain base vector, a small quantity of reported superposition coefficients of resource elements may be used, and low quantization precision may be used for the superposition coefficients of the resource elements.

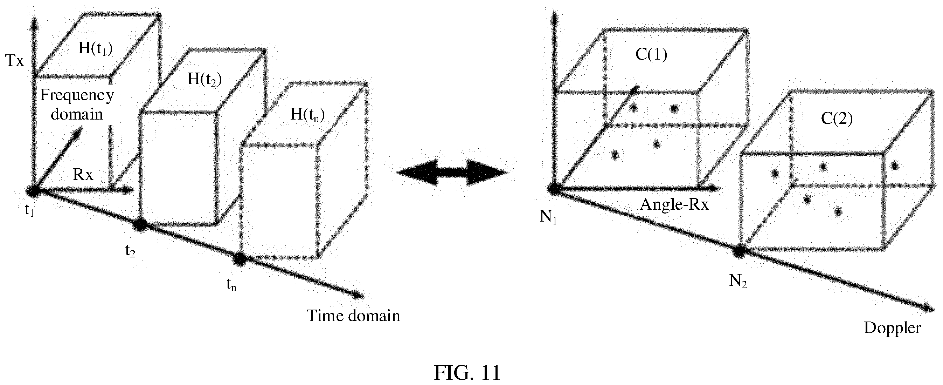

For example, as shown in FIG. 11, N1 and N2 are time domain base vectors. It can be seen that for each time domain base vector, subscripts of three different dimensions exist, that is, the time domain base vector is a form of a three-dimensional matrix. Therefore, for different time domain base vectors, the superposition coefficients of the resource elements may be reported based on different quantization precision information.

For example, in the case shown in FIG. 11, the terminal device may report the frequency domain base vector, the receive side spatial domain base vector, and the transmit side spatial domain base vector by using one field, and the time domain base vector may be reported by using another field.

For example, if the time domain base vector, the frequency domain base vector, and the transmit side spatial domain base vector are selected from an orthogonal/non-orthogonal group, the terminal device may add a corresponding orthogonal group/non-orthogonal group number to the measurement result.

If the receive side spatial domain base vector is selected from the non-orthogonal group, the terminal device may add a corresponding non-orthogonal group number to the measurement result.

Optionally, when reporting the base vectors corresponding to the resource element to the network device, the terminal device may use a joint reporting manner or an independent reporting manner. The joint reporting may be understood as indicating a plurality of base vectors by using one field. For example, four-dimensional joint reporting may mean reporting four base vectors by using one field, and three-dimensional joint reporting may mean reporting three base vectors by using one field. Independent reporting may be understood as indicating one base vector by using one field.

For example, the measurement result may include one piece of indication information, and the indication information is used to indicate a base vector corresponding to a resource element.

Alternatively, the measurement result may include P pieces of indication information, where P is equal to a quantity of base vectors corresponding to the resource element, and one piece of indication information is used to indicate one base vector corresponding to the resource element.

Alternatively, the measurement result includes a plurality of pieces of indication information, and any piece of indication information in the plurality of pieces of indication information is used to indicate one or more base vectors corresponding to the resource element.

The reporting manner is described by using an example of reporting the frequency domain base vector, the time domain base vector, the transmit side spatial domain base vector, and the receive side spatial domain base vector

Four-dimensional independent reporting: The frequency domain base vector, the time domain base vector, the transmit side spatial domain base vector, and the receive side spatial domain base vector are respectively reported by using different fields.

Further, the terminal device may further report coefficient subset selection signaling, where the coefficient subset selection signaling is used to indicate to select a plurality of coefficients from $N_{Rx} \times N_{Tx} \times N_f \times N_t$.

Four-dimensional joint reporting: The frequency domain base vector, the time domain base vector, the transmit side spatial domain base vector, and the receive side spatial domain base vector are reported by using one field.

Three-dimensional joint reporting: Three base vectors in the frequency domain base vector, the time domain base vector, the transmit side spatial domain base vector, and the receive side spatial domain base vector are reported by using one field, and the other fourth base vector may be reported by using another field.

Two-dimensional joint reporting: Two base vectors in the frequency domain base vector, the time domain base vector, the transmit side spatial domain base vector, and the receive side spatial domain base vector are reported by using one field, and the other two base vectors are reported by using another field.

S904: The network device restores the channel based on the measurement result fed back by the terminal device and predicts the future channel.

Step S904 may be an inverse process of S903. For example, using the foregoing second example for description as an example, the network device may determine the superposition coefficient of the resource element based on the time domain base vector and the superposition coefficient corresponding to the time domain base vector, and restore the channel based on the superposition coefficient of the resource element, or may predict the future channel based on the restored channel or the superposition coefficient of the resource element.

In another example, by using the foregoing first example for description as an example and by using an example in which a structure of a codebook is the foregoing first structure, the network device may restore the channel based on the first structure and based on the frequency domain base vector, the time domain base vector, the receive side spatial domain base vector, and the transmit side spatial domain base vector, and the superposition coefficient corresponding to the T resource elements. Alternatively, the network device may restore the channel based on the second structure and based on the frequency domain base vector, the time domain base vector, the receive side spatial domain base vector, and the transmit side spatial domain base vector, and the superposition coefficient corresponding to the T resource elements.

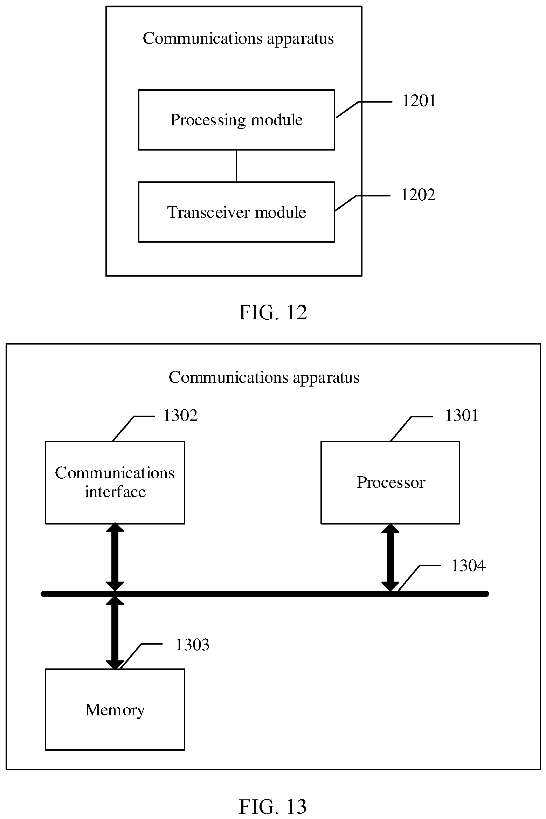

Based on a same technical concept as that of the method embodiment, an embodiment of this application provides a communications apparatus. A structure of the communications apparatus may be shown in FIG. 12, including a processing module 1201 and a transceiver module 1202.

In an implementation, the communications apparatus may be specifically configured to implement the method performed by the terminal device in the embodiment of FIG. 9. The apparatus may be the terminal device, or a chip or a chipset in the terminal device, or a part used to perform a related method function in the chip. The processing module 1201 is configured to perform channel measurement based on a downlink reference signal from a network device; and the transceiver module 1202 is configured to report a measurement result to the network device, where the measurement result indicates T resource elements and a superposition coefficient, the resource element is determined based on at least one of the following base vectors: a time domain base vector and a receive side spatial domain base vector, and T is an integer greater than 0.

For example, the resource element is determined based on a frequency domain base vector, the time domain base vector, the receive side spatial domain base vector, and a transmit side spatial domain base vector, and the superposition coefficient is a superposition coefficient corresponding to the T resource elements.

For example, the resource element is determined based on a frequency domain base vector, the receive side spatial domain base vector, and a transmit side spatial domain base vector, and the superposition coefficient is a superposition coefficient corresponding to the T resource elements.

For example, the resource element is determined based on a frequency domain base vector, the receive side spatial domain base vector, and a transmit side spatial domain base vector, the measurement result further indicates the time domain base vector, the superposition coefficient is a superposition coefficient corresponding to the time domain base vector, and the superposition coefficient corresponding to the time domain base vector is determined based on a superposition coefficient corresponding to the T resource elements.

For example, the resource element is the time domain base vector, and the superposition coefficient is a superposition coefficient corresponding to the time domain base vector.

For example, the receive side spatial domain base vector is an oversampling DFT vector, and an oversampling rate of the receive side spatial domain base vector is related to the quantity of times of sending the downlink reference signal.

For example, the oversampling rate of the receive side spatial domain base vector is equal to the quantity of times of sending the downlink reference signal.

For example, the time domain base vector is an oversampling DFT vector, and the time domain base vector is a non-orthogonal vector or an orthogonal vector.

Optionally, the processing module 1201 is specifically configured to: receive downlink reference signals of Q time units through the transceiver module 1202, where a sending periodicity of the downlink reference signal is related to movement information of the terminal device, and Q is an integer greater than 0; separately measure the downlink reference signals of the Q time units to obtain measurement values of the downlink reference signals of the Q time units; and perform weighted combination on the measurement values of the downlink reference signals of the Q time units.

In some embodiments, the transceiver module 1202 is further configured to send movement information to the network device before receiving the downlink reference signals of the plurality of time units.

For example, the movement information includes a movement speed.

For example, the measurement result includes one piece of indication information, and the indication information is used to indicate a base vector corresponding to the resource element.

Alternatively, the measurement result includes P pieces of indication information, where P is equal to a quantity of base vectors corresponding to the resource element, and one piece of indication information is used to indicate one base vector corresponding to the resource element.

Alternatively, the measurement result includes a plurality of pieces of indication information, and any piece of indication information in the plurality of pieces of indication information is used to indicate one or more base vectors corresponding to the resource element.

In another implementation, the communications apparatus may be specifically configured to implement the method performed by the network device in the embodiment of FIG. 9. The apparatus may be the network device, or a chip or a chipset in the network device, or a part used to perform a related method function in the chip. The transceiver module 1202 is configured to communicate with a terminal device. The processing module 1201 is configured to: send a downlink reference signal to the terminal device through the transceiver module 1202, and receive a measurement result from the terminal device through the transceiver module 1202, where the measurement result indicates T resource elements and a superposition coefficient, the resource element is determined based on at least one of the following base vectors: a time domain base vector and a receive side spatial domain base vector, and T is an integer greater than 0.

For example, the resource element is determined based on a frequency domain base vector, the time domain base vector, the receive side spatial domain base vector, and a transmit side spatial domain base vector, and the superposition coefficient is a superposition coefficient corresponding to the T resource elements.

For example, the resource element is determined based on a frequency domain base vector, the receive side spatial domain base vector, and a transmit side spatial domain base vector, and the superposition coefficient is a superposition coefficient corresponding to the T resource elements.

For example, the resource element is determined based on a frequency domain base vector, the receive side spatial domain base vector, and a transmit side spatial domain base vector, the measurement result further indicates the time domain base vector, the superposition coefficient is a superposition coefficient corresponding to the time domain base vector, and the superposition coefficient corresponding to the time domain base vector is determined based on a superposition coefficient corresponding to the T resource elements.

For example, the resource element is the time domain base vector, and the superposition coefficient is a superposition coefficient corresponding to the time domain base vector.

For example, the receive side spatial domain base vector is an oversampling DFT vector, and an oversampling rate of the receive side spatial domain base vector is related to the quantity of times of sending the downlink reference signal.

For example, the oversampling rate of the receive side spatial domain base vector is equal to the quantity of times of sending the downlink reference signal.

For example, the time domain base vector is an oversampling DFT vector, and the time domain base vector is a non-orthogonal vector or an orthogonal vector.

In some embodiments, the processing module 1201 is further configured to: receive movement information of the terminal device through the transceiver module 1202 before sending the downlink reference signal to the terminal device through the transceiver module 1202; and determine a sending periodicity of the downlink reference signal based on the movement information.

When sending the downlink reference signal to the terminal device through the transceiver module 1202, the processing module 1201 is specifically configured to send Q downlink reference signals to the terminal device based on the sending periodicity, where Q is an integer greater than 0.

For example, the movement information includes a movement speed.

For example, the measurement result includes one piece of indication information, and the indication information is used to indicate a base vector corresponding to the resource element.

Alternatively, the measurement result includes P pieces of indication information, where P is equal to a quantity of base vectors corresponding to the resource element, and one piece of indication information is used to indicate one base vector corresponding to the resource element.

Alternatively, the measurement result includes a plurality of pieces of indication information, and any piece of indication information in the plurality of pieces of indication information is used to indicate one or more base vectors corresponding to the resource element.

Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module. It may be understood that, for the function or implementation of each module in this embodiment of this application, further refer to the related description of the method embodiment.

In a possible manner, the communications apparatus may be shown in FIG. 13. The communications apparatus may be the communications device or a chip in the communications device. The communications device may be the terminal device or the network device. The apparatus may include a processor 1301, a communications interface 1302, and a memory 1303. The processing module 1201 may be the processor 1301. The transceiver module 1202 may be the communications interface 1302.

The processor 1301 may be a central processing module (central processing unit, CPU), a digital processing module, or the like. The communications interface 1302 may be a transceiver, an interface circuit such as a transceiver circuit, a transceiver chip, or the like. The apparatus further includes a memory 1303, configured to store a program executed by the processor 1301. The memory 1303 may be a non-volatile memory, for example, a hard disk drive (hard disk drive, HDD) or a solid-state drive (solid-state drive, SSD), or may be a volatile memory (volatile memory), such as a random access memory (random-access memory, RAM). The memory 1303 is any other medium that can carry or store expected program code in a form of an instruction structure or a data structure and that can be accessed by a computer, but is not limited thereto.

The processor 1301 is configured to execute program code stored in the memory 1303, and is specifically configured to perform the action of the processing module 1201. Details are not described herein again in this application. The communications interface 1302 is specifically configured to perform the action of the transceiver module 1202. Details are not described herein again in this application.

A specific connection medium between the communications interface 1302, the processor 1301, and the memory 1303 is not limited in this embodiment of this application. In this embodiment of this application, in FIG. 13, the memory 1303, the processor 1301, and the communications interface 1302 are connected by using a bus 1304. The bus is indicated by using a thick line in FIG. 13. A connection manner between other components is merely an example for description, and imposes no limitation. The bus may be classified into an address bus, a data bus, a control bus, and the like. For ease of representation, only one bold line is used for representation in FIG. 13, but this does not mean that there is only one bus or only one type of bus.

An embodiment of the present invention further provides a computer-readable storage medium, configured to store computer software instructions that need to be executed by the foregoing processor, and the computer software instructions include programs that need to be executed by the foregoing processor.

A person skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

The computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

**Claims**

1. A measurement reporting method, wherein the method comprises:

    performing channel measurement based on a downlink reference signal from a network device; and
    reporting a measurement result to the network device, wherein the measurement result indicates T resource elements and a superposition coefficient, the resource element is determined based on at least one of the following base vectors: a time domain base vector and a receive side spatial domain base vector, and T is an integer greater than 0.

2. The method according to claim 1, wherein the resource element is determined based on a frequency domain base vector, the time domain base vector, the receive side spatial domain base vector, and a transmit side spatial domain base vector, and the superposition coefficient is a superposition coefficient corresponding to the T resource elements.

3. The method according to claim 1, wherein the resource element is determined based on a frequency domain base vector, the receive side spatial domain base vector, and a transmit side spatial domain base vector, and the superposition coefficient is a superposition coefficient corresponding to the T resource elements.

4. The method according to claim 1, wherein the resource element is determined based on a frequency domain base vector, the receive side spatial domain base vector, and a transmit side spatial domain base vector, the measurement result further indicates the time domain base vector, the superposition coefficient is a superposition coefficient corresponding to the time domain base vector, and the superposition coefficient corresponding to the time domain base vector is determined based on a superposition coefficient corresponding to the T resource elements.

5. The method according to claim 1, wherein the resource element is the time domain base vector, and the superposition coefficient is a superposition coefficient corresponding to the time domain base vector.

6. The method according to any one of claims 1 to 5, wherein the receive side spatial domain base vector is an oversampling discrete fourier transform DFT vector, and an oversampling rate of the receive side spatial domain base vector is related to a quantity of times of sending the downlink reference signal.

7. The method according to claim 6, wherein the oversampling rate of the receive side spatial domain base vector is equal to the quantity of times of sending the downlink reference signal.

8. The method according to any one of claims 1 to 7, wherein the time domain base vector is an oversampling DFT vector, and the time domain base vector is a non-orthogonal vector or an orthogonal vector.

9. The method according to any one of claims 1 to 8, wherein the performing channel measurement based on a downlink reference signal from a network device comprises:

   receiving downlink reference signals of Q time units, wherein a sending periodicity of the downlink reference signal is related to movement information of a terminal device, and Q is an integer greater than 0;
   separately measuring the downlink reference signals of the Q time units to obtain measurement values of the downlink reference signals of the Q time units; and
   performing weighted combination on the measurement values of the downlink reference signals of the Q time units.

10. The method according to claim 9, wherein before the receiving downlink reference signals of Q time units, the method further comprises:
    sending the movement information to the network device.

11. The method according to claim 10, wherein the movement information comprises a movement speed.

12. The method according to any one of claims 1 to 11, wherein the measurement result comprises one piece of indication information, and the indication information is used to indicate a base vector corresponding to the resource element;

    the measurement result comprises P pieces of indication information, wherein P is equal to a quantity of base vectors corresponding to the resource element, and one piece of indication information is used to indicate one base vector corresponding to the resource element; or
    the measurement result comprises a plurality of pieces of indication information, and any piece of indication information in the plurality of pieces of indication information is used to indicate one or more base vectors corresponding to the resource element.

13. A measurement reporting method, wherein the method comprises:

    sending a downlink reference signal to a terminal device; and
    receiving a measurement result from the terminal device, wherein the measurement result indicates T resource elements and a superposition coefficient, the resource element is determined based on at least one of the following base vectors: a time domain base vector and a receive side spatial domain base vector, and T is an integer greater than 0.

**14.** The method according to claim 13, wherein the resource element is determined based on a frequency domain base vector, the time domain base vector, the receive side spatial domain base vector, and a transmit side spatial domain base vector, and the superposition coefficient is a superposition coefficient corresponding to the T resource elements.

**15.** The method according to claim 13, wherein the resource element is determined based on a frequency domain base vector, the receive side spatial domain base vector, and a transmit side spatial domain base vector, and the superposition coefficient is a superposition coefficient corresponding to the T resource elements.

**16.** The method according to claim 13, wherein the resource element is determined based on a frequency domain base vector, the receive side spatial domain base vector, and a transmit side spatial domain base vector, the measurement result further indicates the time domain base vector, the superposition coefficient is a superposition coefficient corresponding to the time domain base vector, and the superposition coefficient corresponding to the time domain base vector is determined based on a superposition coefficient corresponding to the T resource elements.

**17.** The method according to claim 13, wherein the resource element is the time domain base vector, and the superposition coefficient is a superposition coefficient corresponding to the time domain base vector.

**18.** The method according to any one of claims 13 to 17, wherein the receive side spatial domain base vector is an oversampling discrete fourier transform DFT vector, and an oversampling rate of the receive side spatial domain base vector is related to a quantity of times of sending the downlink reference signal.

**19.** The method according to claim 18, wherein the oversampling rate of the receive side spatial domain base vector is equal to the quantity of times of sending the downlink reference signal.

**20.** The method according to any one of claims 13 to 19, wherein the time domain base vector is an oversampling DFT vector, and the time domain base vector is a non-orthogonal vector or an orthogonal vector.

**21.** The method according to any one of claims 13 to 20, wherein before the sending a downlink reference signal to a terminal device, the method further comprises:

receiving movement information of the terminal device; and
determining a sending periodicity of the downlink reference signal based on the movement information; and
the sending a downlink reference signal to a terminal device comprises:
sending Q downlink reference signals to the terminal device based on the sending periodicity, wherein Q is an integer greater than 0.

**22.** The method according to claim 21, wherein the movement information comprises a movement speed.

**23.** The method according to any one of claims 13 to 22, wherein the measurement result comprises one piece of indication information, and the indication information is used to indicate a base vector corresponding to the resource element;

the measurement result comprises P pieces of indication information, wherein P is equal to a quantity of base vectors corresponding to the resource element, and one piece of indication information is used to indicate one base vector corresponding to the resource element; or
the measurement result comprises a plurality of pieces of indication information, and any piece of indication information in the plurality of pieces of indication information is used to indicate one or more base vectors corresponding to the resource element.

**24.** A measurement reporting apparatus, wherein the apparatus comprises:

a processing module, configured to perform channel measurement based on a downlink reference signal from a network device; and
a transceiver module, configured to report a measurement result to the network device, wherein the measurement result indicates T resource elements and a superposition coefficient, the resource element is determined based on at least one of the following base vectors: a time domain base vector and a receive side spatial domain base vector, and T is an integer greater than 0.

25. The apparatus according to claim 24, wherein the resource element is determined based on a frequency domain base vector, the time domain base vector, the receive side spatial domain base vector, and a transmit side spatial domain base vector, and the superposition coefficient is a superposition coefficient corresponding to the T resource elements.

26. The apparatus according to claim 24, wherein the resource element is determined based on a frequency domain base vector, the receive side spatial domain base vector, and a transmit side spatial domain base vector, and the superposition coefficient is a superposition coefficient corresponding to the T resource elements.

27. The apparatus according to claim 24, wherein the resource element is determined based on a frequency domain base vector, the receive side spatial domain base vector, and a transmit side spatial domain base vector, the measurement result further indicates the time domain base vector, the superposition coefficient is a superposition coefficient corresponding to the time domain base vector, and the superposition coefficient corresponding to the time domain base vector is determined based on a superposition coefficient corresponding to the T resource elements.

28. The apparatus according to claim 24, wherein the resource element is the time domain base vector, and the superposition coefficient is a superposition coefficient corresponding to the time domain base vector

29. The apparatus according to any one of claims 24 to 28, wherein the receive side spatial domain base vector is an oversampling discrete fourier transform DFT vector, and an oversampling rate of the receive side spatial domain base vector is related to a quantity of times of sending the downlink reference signal.

30. The apparatus according to claim 29, wherein the oversampling rate of the receive side spatial domain base vector is equal to the quantity of times of sending the downlink reference signal.

31. The apparatus according to any one of claims 24 to 30, wherein the time domain base vector is an oversampling DFT vector, and the time domain base vector is a non-orthogonal vector or an orthogonal vector.

32. The apparatus according to any one of claims 24 to 31, wherein the processing module is specifically configured to:

receive downlink reference signals of Q time units through the transceiver module, wherein a sending periodicity of the downlink reference signal is related to movement information of a terminal device, and Q is an integer greater than 0;
separately measure the downlink reference signals of the Q time units to obtain measurement values of the downlink reference signals of the Q time units; and
perform weighted combination on the measurement values of the downlink reference signals of the Q time units.

33. The apparatus according to claim 32, wherein the transceiver module is further configured to send the movement information to the network device before receiving the downlink reference signals of the Q time units.

34. The apparatus according to claim 33, wherein the movement information comprises a movement speed.

35. The apparatus according to any one of claims 24 to 34, wherein the measurement result comprises one piece of indication information, and the indication information is used to indicate a base vector corresponding to the resource element;

the measurement result comprises P pieces of indication information, wherein P is equal to a quantity of base vectors corresponding to the resource element, and one piece of indication information is used to indicate one base vector corresponding to the resource element; or
the measurement result comprises a plurality of pieces of indication information, and any piece of indication information in the plurality of pieces of indication information is used to indicate one or more base vectors corresponding to the resource element.

36. The apparatus according to any one of claims 24 to 35, wherein the processing module is a processor, and the transceiver module is a transceiver.

37. The apparatus according to any one of claims 24 to 36, wherein the apparatus is a terminal device, a chip, or a chip system.

38. A measurement reporting apparatus, wherein the apparatus comprises:

a transceiver module, configured to communicate with a terminal device; and
a processing module, configured to: send a downlink reference signal to the terminal device through the transceiver module; and receive a measurement result from the terminal device through the transceiver module, wherein the measurement result indicates T resource elements and a superposition coefficient, the resource element is determined based on at least one of the following base vectors: a time domain base vector and a receive side spatial domain base vector, and T is an integer greater than 0.

39. The apparatus according to claim 38, wherein the resource element is determined based on a frequency domain base vector, the time domain base vector, the receive side spatial domain base vector, and a transmit side spatial domain base vector, and the superposition coefficient is a superposition coefficient corresponding to the T resource elements.

40. The apparatus according to claim 38, wherein the resource element is determined based on a frequency domain base vector, the receive side spatial domain base vector, and a transmit side spatial domain base vector, and the superposition coefficient is a superposition coefficient corresponding to the T resource elements.

41. The apparatus according to claim 38, wherein the resource element is determined based on a frequency domain base vector, the receive side spatial domain base vector, and a transmit side spatial domain base vector, the measurement result further indicates the time domain base vector, the superposition coefficient is a superposition coefficient corresponding to the time domain base vector, and the superposition coefficient corresponding to the time domain base vector is determined based on a superposition coefficient corresponding to the T resource elements.

42. The apparatus according to claim 38, wherein the resource element is the time domain base vector, and the superposition coefficient is a superposition coefficient corresponding to the time domain base vector

43. The apparatus according to any one of claims 38 to 42, wherein the receive side spatial domain base vector is an oversampling discrete fourier transform DFT vector, and an oversampling rate of the receive side spatial domain base vector is related to a quantity of times of sending the downlink reference signal.

44. The apparatus according to claim 43, wherein the oversampling rate of the receive side spatial domain base vector is equal to the quantity of times of sending the downlink reference signal.

45. The apparatus according to any one of claims 38 to 44, wherein the time domain base vector is an oversampling DFT vector, and the time domain base vector is a non-orthogonal vector or an orthogonal vector.

46. The apparatus according to any one of claims 38 to 45, wherein the processing module is further configured to:

receive movement information of the terminal device through the transceiver module before sending the downlink reference signal to the terminal device through the transceiver module; and
determine a sending periodicity of the downlink reference signal based on the movement information; and when sending the downlink reference signal to the terminal device through the transceiver module, the processing module is specifically configured to send Q downlink reference signals to the terminal device based on the sending periodicity, wherein Q is an integer greater than 0.

47. The apparatus according to claim 46, wherein the movement information comprises a movement speed.

48. The apparatus according to any one of claims 38 to 47, wherein the measurement result comprises one piece of indication information, and the indication information is used to indicate a base vector corresponding to the resource element;

the measurement result comprises P pieces of indication information, wherein P is equal to a quantity of base vectors corresponding to the resource element, and one piece of indication information is used to indicate one base vector corresponding to the resource element; or

the measurement result comprises a plurality of pieces of indication information, and any piece of indication information in the plurality of pieces of indication information is used to indicate one or more base vectors corresponding to the resource element.

49. The apparatus according to any one of claims 38 to 48, wherein the processing module is a processor, and the transceiver module is a transceiver.

50. The apparatus according to any one of claims 38 to 49, wherein the apparatus is a network device, a chip, or a chip system.

51. A computer-readable storage medium, wherein the computer-readable storage medium stores a program or instructions; and when the program or the instructions is/are read and executed by one or more processors, the method according to any one of claims 1 to 12 can be implemented, or when the program or the instructions is/are read and executed by one or more processors, the method according to any one of claims 13 to 23 can be implemented.

52. A computer program product, wherein when the computer program product runs on a terminal device, the terminal device is enabled to perform the method according to any one of claims 1 to 12; or
when the computer program product runs on a network device, the network device is enabled to perform the method according to any one of claims 13 to 23.

53. A communications apparatus, comprising a processor, wherein the processor is configured to execute a computer program stored in a memory, to enable the communication apparatus to perform the method according to any one of claims 1 to 12 or the method according to any one of claims 13 to 23.

54. The communications apparatus according to claim 53, wherein the communications apparatus further comprises the memory.

FIG. 1

FIG. 2

FIG. 3

FIG. 4

FIG. 5

FIG. 6

FIG. 7

FIG. 8

FIG. 9

FIG. 10

FIG. 11

Communications apparatus

Processing module — 1201

Transceiver module — 1202

FIG. 12

Communications apparatus

1302 —

Communications interface

1301 —

Processor

— 1304

1303 —

Memory

FIG. 13

## INTERNATIONAL SEARCH REPORT

| International application No. |
| --- |
| **PCT/CN2021/101158** |

**A.    CLASSIFICATION OF SUBJECT MATTER**

H04W 24/10(2009.01)i

According to International Patent Classification (IPC) or to both national classification and IPC

**B.    FIELDS SEARCHED**

Minimum documentation searched (classification system followed by classification symbols)

H04W; H04L; H04Q

Documentation searched other than minimum documentation to the extent that such documents are included in the fields searched

Electronic data base consulted during the international search (name of data base and, where practicable, search terms used)

CNPAT, WPI, EPODOC, CNKI, 3GPP: 测量 参考信号 上报 反馈 时域 空域 频域 基向量 资源 叠加 系数 移动 速度 周期 measur+ reference signal report+ feedback time spatial frequency domain basis vector resource superposition coefficient moving speed period

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 111510189 A (HUAWEI TECHNOLOGIES CO., LTD.) 07 August 2020 (2020-08-07) description, paragraphs 2-49 | 1-8, 12-20, 23-31, 35-45, 48-54 |
| X | CN 110855336 A (HUAWEI TECHNOLOGIES CO., LTD.) 28 February 2020 (2020-02-28) description, paragraphs 2-153 | 1-8, 12-20, 23-31, 35-45, 48-54 |
| Y | CN 110855336 A (HUAWEI TECHNOLOGIES CO., LTD.) 28 February 2020 (2020-02-28) description, paragraphs 2-153 | 9-11, 21-22, 32-34, 46-47 |
| Y | CN 111224762 A (DATANG MOBILE COMMUNICATIONS EQUIPMENT CO., LTD.) 02 June 2020 (2020-06-02) description, paragraphs 7-18 | 9-11, 21-22, 32-34, 46-47 |
| A | CN 107819559 A (HUAWEI TECHNOLOGIES CO., LTD.) 20 March 2018 (2018-03-20) entire document | 1-54 |
| A | CN 109075849 A (SAMSUNG ELECTRONICS CO., LTD.) 21 December 2018 (2018-12-21) entire document | 1-54 |
| A | US 2012178374 A1 (ZTE CORPORATION et al.) 12 July 2012 (2012-07-12) entire document | 1-54 |

☑ Further documents are listed in the continuation of Box C.      ☑ See patent family annex.

| | |
| --- | --- |
| *    Special categories of cited documents: <br> "A"   document defining the general state of the art which is not considered to be of particular relevance <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
| --- | --- |
| **11 August 2021** | **18 September 2021** |

| Name and mailing address of the ISA/CN | Authorized officer |
| --- | --- |
| **China National Intellectual Property Administration (ISA/ CN)** <br> **No. 6, Xitucheng Road, Jimenqiao, Haidian District, Beijing 100088** <br> **China** | |
| Facsimile No. **(86-10)62019451** | Telephone No. |

Form PCT/ISA/210 (second sheet) (January 2015)

**INTERNATIONAL SEARCH REPORT**

<table>
<tr><td>International application No.</td></tr>
<tr><td>**PCT/CN2021/101158**</td></tr>
</table>

**C.    DOCUMENTS CONSIDERED TO BE RELEVANT**

| Category* | Citation of document, with indication, where appropriate, of the relevant passages | Relevant to claim No. |
|---|---|---|
| A | HUAWEI et al. "Phase Randomization and Correction for CSI quantization in frequency domain"<br>*3GPP TSG RAN WG1 Meeting #96bis R1-1903980*, 12 April 2019 (2019-04-12), entire document | 1-54 |

Form PCT/ISA/210 (second sheet) (January 2015)

## INTERNATIONAL SEARCH REPORT
### Information on patent family members

International application No.

**PCT/CN2021/101158**

| Patent document cited in search report | | | Publication date (day/month/year) | Patent family member(s) | | | Publication date (day/month/year) |
|---|---|---|---|---|---|---|---|
| CN | 111510189 | A | 07 August 2020 | WO | 2020156103 | A1 | 06 August 2020 |
| CN | 110855336 | A | 28 February 2020 | WO | 2020038154 | A1 | 27 February 2020 |
| CN | 111224762 | A | 02 June 2020 | None | | | |
| CN | 107819559 | A | 20 March 2018 | US | 2017331609 | A1 | 16 November 2017 |
| | | | | US | 2014211723 | A1 | 31 July 2014 |
| | | | | EP | 2750433 | A1 | 02 July 2014 |
| | | | | WO | 2013044886 | A1 | 04 April 2013 |
| | | | | CN | 107872266 | A | 03 April 2018 |
| | | | | CN | 103037397 | A | 10 April 2013 |
| CN | 109075849 | A | 21 December 2018 | US | 2020083937 | A1 | 12 March 2020 |
| | | | | EP | 3748866 | A1 | 09 December 2020 |
| | | | | US | 2017302353 | A1 | 19 October 2017 |
| | | | | WO | 2017183905 | A2 | 26 October 2017 |
| | | | | KR | 20180127447 | A | 28 November 2018 |
| US | 2012178374 | A1 | 12 July 2012 | WO | 2012094082 | A1 | 12 July 2012 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010591803